# EUROPÄISCHE PATENTSCHRIFT

(11) **EP 3 261 744 B1**
(45) Veröffentlichungstag und Bekanntmachung des Hinweises auf die Patenterteilung: **08.01.2020**
(21) Anmeldenummer: 16705742.1
(22) Anmeldetag: 05.02.2016
(51) Int. Cl.: B01D 45/08

(54) **ABSCHEIDEANLAGE UND VERFAHREN ZUM ABSCHEIDEN VON VERUNREINIGUNGEN AUS EINEM ROHGASSTROM**
SEPARATION PLANT AND METHOD FOR SEPARATING IMPURITIES FROM A CRUDE GAS FLOW
INSTALLATION DE SÉPARATION ET PROCÉDÉ PERMETTANT DE SÉPARER DES IMPURETÉS D'UN COURANT DE GAZ IMPUR

(30) Priorität: 27.02.2015 DE 102015203611
(43) Veröffentlichungstag der Anmeldung: 03.01.2018
(73) Patentinhaber: Dürr Systems AG, 74321 Bietigheim-Bissingen (DE)
(72) Erfinder: WIELAND, Dietmar, 71336 Waiblingen (DE); SCHÖTTLE, Frank, 70839 Gerlingen (DE)
(74) Vertreter: Hoeger, Stellrecht & Partner Patentanwälte mbB
(86) Internationale Anmeldenummer: PCT/EP2016/052563
(87) Internationale Veröffentlichungsnummer: WO 2016/134957

(56) Entgegenhaltungen:
- EP-A2- 2 409 788
- CN-Y- 2 671 663
- DE-A1- 3 517 198
- DE-A1- 4 411 615
- DE-A1-102012 004 587
- DE-U1-202014 103 177
- US-A1- 2003 033 688

## Beschreibung

Die vorliegende Erfindung betrifft eine Vorrichtung und ein Verfahren zum Abscheiden von Verunreinigungen aus einem Rohgasstrom.

Derartige Vorrichtungen und Verfahren können beispielsweise bei Anlagen zur Behandlung von Werkstücken, insbesondere Lackieranlagen, Verwendung finden.

Die DE 20 2014 103 177 U1 offenbart eine Filteranlage zum Reinigen eines Rohgasstroms aus einer Lackieranlage.

Die DE 35 17 198 A1 offenbart ein Verfahren zur Reinigung von Wasser und Luft in Lackieranlagen unter Verwendung einer Schaufelwalze.

Die CN 2671663 Y offenbart einen Prallabscheider.

Die EP 2 409 788 A2 offenbart eine Absaugglocke für eine mobile Reinigungsvorrichtung.

Die US 2003/0033688 A1 offenbart eine Luftfiltervorrichtung.

Die DE 44 11 615 A1 offenbart eine Vorrichtung zur Reinigung von Filtern in einer staubdicht abschließbaren Kabine.

Die DE 10 2012 004 587 A1 offenbart eine Filtereinrichtung für eine Lasersinter- oder Laserschmelzanlage.

Der vorliegenden Erfindung liegt die Aufgabe zugrunde, eine Vorrichtung und ein Verfahren zum Abscheiden von Verunreinigungen aus einem Rohgasstrom zu schaffen, welche eine hohe Abscheideeffizienz aufweisen und variabel einsetzbar sind.

Diese Aufgabe wird durch eine Abscheideanlage gemäß Anspruch 1 gelöst.

Das Abscheidemodul ist an einer Modulaufnahme der Abscheideanlage anordenbar.

Dem Abscheidemodul ist der Rohgasstrom zum Abscheiden von Verunreinigungen zuführbar.

Günstig kann es sein, wenn die Abscheideanlage zwei oder mehr als zwei Abscheidestufen umfasst.

Die Abscheidestufen unterscheiden sich vorzugsweise hinsichtlich ihrer Funktionsweise, ihres Aufbaus und/oder ihrer Dimensionierung voneinander.

Bei einer Ausgestaltung der Erfindung kann vorgesehen sein, dass die Abscheideanlage mehrere Abscheidemodule und/oder mehrere Modulaufnahmen umfasst.

Grundsätzlich können einzelne oder mehrere Elemente, Bauteile, Bestandteile, etc. der beschriebenen Vorrichtungen oder auch die gesamten Module, Vorrichtungen und Anlagen einfach, zweifach, dreifach oder mehr als dreifach vorgesehen sein.

Beispielsweise kann eine Abscheideanlage mehrere, insbesondere mehr als fünf, mehr als zehn oder mehr als fünfzehn, Abscheidemodule und/oder mehrere, beispielsweise mehr als fünf, mehr als zehn oder mehr als fünfzehn, Modulaufnahmen umfassen.

Die Abscheideanlage oder ein Abscheidemodul der Anlage dient vorzugsweise dem Abscheiden von Lack-Overspray aus einem mit Lack-Overspray beladenen Rohgasstrom.

Der Lack-Overspray bildet somit vorzugsweise die Verunreinigungen, welche aus einem Rohgasstrom abgeschieden werden sollen.

Abhängig von einem verwendeten Lacksystem können die Eigenschaften des abzuscheidenden Lack-Oversprays (Farbnebel) stark differieren. Eine bestimmte Art von Abscheideanlage eignet sich somit nicht für alle Lacksysteme gleichermaßen.

Vorzugsweise ermöglicht eine erfindungsgemäße Abscheideanlage und/oder ein erfindungsgemäßes Abscheidemodul eine hohe Abscheideeffizienz auch bei unterschiedlichen Lacksystemen, so dass letztlich ein variabler Einsatz möglich ist, insbesondere wahlweise abhängig vom verwendeten Lacksystem zur Gewährleistung einer optimalen Abscheidung.

Günstig kann es sein, wenn eine Abscheideanlage eine Grundkonstruktion umfasst, welche eine oder mehrere Modulaufnahmen, beispielsweise sechs, acht oder zehn Modulaufnahmen, umfasst.

Die Modulaufnahmen dienen insbesondere der Aufnahme von Abscheidemodulen, insbesondere Abscheidemodulen unterschiedlicher Art und/oder Ausgestaltung.

Günstig kann es sein, wenn mehrere Abscheidemodule mit unterschiedlichen Abscheidesystemen vorgesehen sind, so dass abhängig von den Eigenschaften der abzuscheidenden Verunreinigungen eine Auswahl eines angepassten Abscheidemoduls zur Verwendung an einer Modulaufnahme getroffen werden kann.

Ein Abscheidemodul kann insbesondere einzelne oder mehrere der nachfolgend genannten Abscheideelemente umfassen: Massenkraftabscheider, Schwerkraftabscheider, Umlenkabscheider, Fliehkraftabscheider, Filterabscheider, insbesondere Speicherfilter, Abreinigungsfilter oder Schutzschichtfilter, Oberflächenabscheider, Tiefenabscheider, etc.

Ein Abscheidemodul umfasst vorzugsweise mehrere Abscheideelementaufnahmen, wobei die Abscheideelementaufnahmen vorzugsweise der Aufnahme mehrerer, insbesondere unterschiedlicher, Abscheideelemente dienen.

Vorzugsweise weist ein Abscheidemodul eine Abscheideelementaufnahme auf, in welche wahlweise Abscheideelemente unterschiedlicher Art einsetzbar sind.

Ein Abscheideelement kann beispielsweise ein Einweg-Abscheideelement sein.

Beispielsweise kann ein Abscheideelement aus einem Kartonmaterial, einem Papiermaterial, einem Kunststoffmaterial, einem Keramikmaterial und/oder einem Metallmaterial gebildet sein oder eines oder mehrere der vorstehend genannten Materialien umfassen.

Ein Abscheideelement kann ferner vorzugsweise ein regenerierbares Abscheideelement sein.

Ein regenerierbares Abscheideelement ist insbesondere ein Abscheideelement, welches mehrfach verwendbar ist und hierzu lediglich in regelmäßigen oder unregelmäßigen Abständen regeneriert, beispielsweise gereinigt oder sonstwie behandelt, werden muss.

Bei einer Ausgestaltung der Erfindung kann vorgesehen sein, dass mindestens eine der Abscheidestufen in einem Abscheidemodul angeordnet ist.

Insbesondere kann vorgesehen sein, dass zwei oder mehr als zwei Abscheidestufen in einem Abscheidemodul angeordnet sind.

Alternativ oder ergänzend hierzu kann vorgesehen sein, dass mindestens eine der Abscheidestufen in oder an einer Modulaufnahme angeordnet ist.

Insbesondere kann vorgesehen sein, dass zwei oder mehr als zwei Abscheidestufen in oder an einer Modulaufnahme angeordnet sind.

Eine Abscheidestufe in oder an einer Modulaufnahme ist vorzugsweise eine Hauptabscheidestufe, beispielsweise ein Grobabscheider.

Eine oder mehrere Abscheidestufen in einem Abscheidemodul sind vorzugsweise Feinabscheidestufen.

Günstig kann es sein, wenn als Rotationsabscheideelemente ausgebildete Abscheideelemente stationär an einer Grundkonstruktion der Abscheideanlage vorgesehen sind. Hierdurch kann vorzugsweise ein Aufwand zum Ausbau oder Einbau der Rotationsabscheideelemente für deren Reinigung entfallen.

Günstig kann es sein, wenn ein oder mehrere als Nachfilterelemente ausgebildete Abscheideelemente in oder an der Grundkonstruktion angeordnet sind. Beispielsweise kann vorgesehen sein, dass diese Abscheideelemente durch eine separate Öffnung, beispielsweise eine Türe, welche vorzugsweise in einer Seitenwand der Grundkonstruktion angeordnet ist, zugänglich sind, insbesondere zum Austausch und/oder zur Regeneration derselben.

Ein in oder an der Grundkonstruktion, insbesondere einer Modulaufnahme, angeordnetes Abscheideelement ist vorzugsweise in oder an der Grundkonstruktion, insbesondere der Modulaufnahme, regenerierbar.

Beispielsweise kann vorgesehen sein, dass ein Abtrocknen von an dem Abscheideelement anhaftenden zunächst nassen Verunreinigungen in der Grundkonstruktion erfolgt. Ein Abreinigen der getrockneten Verunreinigungen erfolgt dann vorzugsweise mittels eines mechanischen Abstreifers.

Ein solcher mechanischer Abstreifer kann beispielsweise in ein Abscheidemodul und/oder ein Regenerationsmodul integriert oder an demselben angeordnet sein.

Günstig kann es sein, wenn mindestens eine Auffangwanne zur Aufnahme von abgereinigten Verunreinigungen vorgesehen ist. Eine solche Auffangwanne ist insbesondere unter einem oder mehreren Abscheideelementen und/oder unter einem Abreinigungsbereich einer Regenerationsvorrichtung angeordnet.

Beispielsweise kann vorgesehen sein, dass ein Abscheidemodul eine Auffangwanne umfasst.

Beispielsweise dann, wenn eine thermische Trocknung und/oder Applikation eines Filterhilfsmaterials vorgesehen ist, kann ein Abscheideelement und/oder ein Abscheidemodul beispielsweise an eine Regenerationsstation oder Reinigungsstation gebracht werden, um die thermische Trocknung und/oder die Applikation eines Filterhilfsmaterials durchzuführen.

Alternativ hierzu kann ferner vorgesehen sein, dass eine thermische Trocknung und/oder eine Applikation von Filterhilfsmaterial manuell oder automatisch an einem Abscheideelement und/oder einem Abscheidemodul durchgeführt wird.

Günstig kann es sein, wenn ein Abscheidemodul ein mobiles Abscheidemodul ist.

Insbesondere kann vorgesehen sein, dass ein Abscheidemodul als ein verfahrbarer oder verschiebbarer Transportwagen ausgebildet ist.

Ein Abscheidemodul umfasst insbesondere ein Gehäuse, welches beispielsweise mittels Rollenelementen verfahrbar ist.

Das Gehäuse umfasst insbesondere mehrere Abscheideelementaufnahmen und/oder eine Strömungsführung, längs welcher ein Gasstrom von einem Einlassabschnitt des Abscheidemoduls durch das Abscheidemodul hindurch bis zu einem Auslassabschnitt des Abscheidemoduls führbar ist.

Ein Abscheidemodul ist insbesondere im Wesentlichen quaderförmig ausgebildet.

Vorzugsweise ist ein Abscheidemodul im Wesentlichen flächig an eine im Wesentlichen ebene Modulaufnahme heranfahrbar und daran festlegbar.

Erfindungsgemäß ist vorgesehen, dass die Abscheideanlage eine Abscheidestufe umfasst, welche ein Rotationsabscheideelement umfasst.

Ein Rotationsabscheideelement ist eine Bürstenwalze und/oder ein drehbarer Prallabscheider.

Es kann vorgesehen sein, dass eine Abscheidestufe ein einziges Abscheideelement umfasst.

Ferner kann vorgesehen sein, dass eine Abscheidestufe mehrere Abscheideelemente umfasst.

Günstig kann es sein, wenn eine Abscheidestufe mehrere Abscheideelemente, insbesondere Rotationsabscheideelemente, umfasst, welche vorzugsweise in einer gemeinsamen Abscheideelementaufnahme angeordnet sind.

Vorzugsweise sind die Abscheideelemente zusammen mit und/oder mittels der Abscheideelementaufnahme von einem Abscheidemodul oder einer Modulaufnahme entfernbar und/oder an einem Abscheidemodul und/oder einer Modulaufnahme anordenbar.

Beispielsweise kann vorgesehen sein, dass mehrere Abscheideelemente zusammen mit und/oder mittels der Abscheideelementaufnahme von einem Abscheidemodul oder einer Modulaufnahme entfernbar, regenerierbar und anschließend wieder an dem Abscheidemodul bzw. der Modulaufnahme anordenbar sind.

Ein Rotationsabscheideelement ist beispielsweise einströmseitig als Hauptfiltervorrichtung an einem Abscheidemodul vorgesehen.

Ein Abscheidemodul ist beispielsweise für einen Abscheidebetrieb an eine Lackierkabine ankoppelbar.

Nach erfolgter Sättigung eines oder mehrerer Abscheideelemente des Abscheidemoduls ist das Abscheidemodul vorzugsweise abkoppelbar (entkoppelbar) und zur Regenerierung (Regeneration) oder zum Wechsel von Abscheideelementen an eine Regenerationsvorrichtung bzw. eine Wechselstation bringbar.

An einer Regenerationsvorrichtung oder Wechselstation kann ein Abscheideelement vorzugsweise einzeln manuell, semi-automatisch oder vollautomatisch aus dem Abscheidemodul entnommen und in eine Reinigungsstation oder Reinigungsanlage eingebracht werden.

In einer Regenerationsvorrichtung, insbesondere einer Reinigungsstation, wird ein Abscheideelement vorzugsweise so lange behandelt, bis daran abgeschiedene Verunreinigungen, insbesondere Overspray, getrocknet und/oder entfernt sind.

Beispielsweise mittels einer mechanischen Behandlungsvorrichtung, beispielsweise eines Abstreifers, können die Verunreinigungen vorzugsweise von dem Abscheideelement entfernt werden. Das Abscheideelement steht dann insbesondere zur erneuten Verwendung, beispielsweise zum erneuten Einbau in ein Abscheidemodul und/oder eine Grundkonstruktion, zur Verfügung.

Ein Abscheideelement, insbesondere ein Rotationsabscheideelement, kann beispielsweise unter Verwendung von erwärmter Luft thermisch getrocknet werden. Insbesondere kann hierdurch eine Zeitdauer zur Trocknung oder Aushärtung von abgeschiedenen Verunreinigungen reduziert werden.

Als erwärmte Luft kann vorzugsweise ein Abluftstrom aus einem anderen Anlagenteil einer Werkstückbehandlungsanlage, beispielsweise einer Lackieranlage, verwendet werden. Insbesondere eignet sich hierzu Abluft aus einem Zwischentrockner einer Werkstückbehandlungsanlage.

Die erwärmte Luft weist vorzugsweise eine Temperatur von mindestens ungefähr 50 °C, beispielsweise mindestens ungefähr 60 °C, und/oder höchstens ungefähr 120 °C, beispielsweise höchstens ungefähr 100 °C, auf. Vorzugsweise beträgt die Temperatur der erwärmten Luft ungefähr 80 °C.

Es kann vorgesehen sein, dass ein Abscheideelement, insbesondere ein Rotationsabscheideelement, mittels einer Hängefördervorrichtung förderbar ist.

Eine Abscheideanlage und/oder eine Regenerationsvorrichtung umfassen vorzugsweise eine Hängefördervorrichtung.

Mittels der Hängefördervorrichtung ist ein Abscheideelement vorzugsweise von einem Bestückungsbereich zu einem Trocknungsbereich, dann anschließend in einen mechanischen Behandlungsbereich und schließlich zu einem Entnahmebereich förderbar.

Durch die Verwendung einer Hängefördervorrichtung ergibt sich vorzugsweise der Vorteil, dass insbesondere bei einer mechanischen Abreinigung des Abscheideelements die Fördervorrichtung vor Verschmutzung geschützt ist.

Es kann vorgesehen sein, dass die Regenerationsvorrichtung, insbesondere eine Reinigungsanlage, rein manuell betrieben wird. Hierbei kann eine Bestückung und/oder eine Entnahme eines Abscheideelements und/oder ein Verfahren (Fördern) eines Abscheideelements manuell erfolgen. Beispielsweise können Auflaufhebel für als Gehänge ausgebildete Abscheideelemente zum manuellen oder automatischen Verschieben vorgesehen sein.

Günstig kann es sein, wenn eine mechanische Behandlungsvorrichtung, insbesondere ein mechanischer Abstreifer, vorgesehen ist. Zur Betätigung der mechanischen Behandlungsvorrichtung kann beispielsweise ein pneumatischer, elektrischer, hydraulischer oder manueller Antrieb vorgesehen sein. Insbesondere kann ein mechanischer Abstreifer mittels eines solchen Antriebs an ein Rotationsabscheideelement angedrückt oder angepresst werden, um daran anhaftende Verunreinigungen abschaben oder abkratzen zu können. Ein Abscheideelement, insbesondere ein Rotationsabscheideelement, wird bei der Regeneration desselben vorzugsweise in Rotation versetzt, insbesondere um einen Abschabevorgang an einem Abstreifer durchzuführen.

Vorzugsweise ist eine Antriebsvorrichtung, beispielsweise eine elektrische Antriebsvorrichtung, zum drehenden Antreiben eines Rotationsabscheideelements vorgesehen.

Ein Rotationsabscheideelement kann beispielsweise eine Bürstenwalze oder ein drehbarer Prallabscheider sein.

Bei der Verwendung eines Rotationsabscheideelements kann insbesondere ein Rahmenelement, welches ein oder mehrere Rotationsabscheideelemente in einer, mehreren oder sämtlichen senkrecht zur Durchströmungsrichtung verlaufenden Richtungen umgibt, vorgesehen sein. Ein solches Rahmenelement dient vorzugsweise der Aufnahme von abgeschiedenen Verunreinigungen.

Ein Rahmenelement umfasst vorzugsweise eine Seitenwand eines Abscheidemoduls oder bildet eine Seitenwand des Abscheidemoduls.

Vorzugsweise ist ein Rahmenelement Bestandteil einer Abscheideelementaufnahme zur Aufnahme eines oder mehrerer Abscheideelemente.

Günstig kann es sein, wenn ein Rahmenelement zusammen mit einer Abscheideelementaufnahme einer Regenerationsvorrichtung zuführbar ist, insbesondere um an dem Rahmenelement anhaftende Verunreinigungen entfernen zu können.

Ein Rahmenelement bildet vorzugsweise eine Abscheideelementaufnahme, insbesondere zur Aufnahme mehrerer Bürstenwalzen.

Günstig kann es sein, wenn die Abscheideanlage, insbesondere ein Abscheidemodul und/oder eine Modulaufnahme, eine Kopplungsvorrichtung umfasst. Mittels der Kopplungsvorrichtung ist vorzugsweise elektrische und/oder mechanische Energie von einer Modulaufnahme auf ein Abscheidemodul übertragbar.

Die elektrische und/oder mechanische Energie dient vorzugsweise zum Antreiben von bewegten Bauteilen des Abscheidemoduls, beispielsweise Rotationsabscheideelementen, insbesondere Bürstenwalzen oder drehbare Prallabscheider.

Ein Abscheidemodul umfasst vorzugsweise eine Antriebsvorrichtung, mittels welcher ein Abscheideelement des Abscheidemoduls antreibbar ist, insbesondere in Rotation versetzbar ist.

Eine Antriebsvorrichtung kann beispielsweise einen elektrischen Antrieb umfassen. Hierbei ist vorzugsweise vorgesehen, dass mittels der Kopplungsvorrichtung elektrische Energie von der Modulaufnahme auf das Abscheidemodul übertragbar ist. Alternativ oder ergänzend hierzu kann vorgesehen sein, dass ein elektrischer Antrieb mittels einer an dem Abscheidemodul vorgesehenen Batterie oder eines Akkumulators betreibbar ist.

Alternativ oder ergänzend zu einem elektrischen Antrieb kann ein mechanischer Antrieb vorgesehen sein. Hierbei ist vorzugsweise mittels der Kopplungsvorrichtung eine mechanische Kraftübertragung von der Modulaufnahme auf das Abscheidemodul vorgesehen.

Ein mechanischer Antrieb kann beispielsweise ein Kettentrieb sein.

Günstig kann es sein, wenn jedes Abscheidemodul und/oder jedes Abscheideelement einen separaten Antrieb, insbesondere elektrischen Antrieb oder mechanischen Antrieb, umfasst.

Es kann vorgesehen sein, dass die Antriebsvorrichtung eine Rotorvorrichtung umfasst, welche mittels des Rohgasstroms oder eines durch Reinigung des Rohgasstroms erhältlichen Reingasstroms antreibbar ist, so dass der Rohgasstrom oder der durch Reinigung des Rohgasstroms erhältliche Reingasstrom zum Antreiben des beweglichen Abscheideelements nutzbar ist.

Die Rotorvorrichtung kann beispielsweise einen Vertikalrotor, insbesondere einen Savonius-Rotor oder Darrieus-Rotor, umfassen.

Die Rotorvorrichtung ist vorzugsweise in einem Ausströmbereich (Auslassabschnitt) des Abscheidemoduls angeordnet.

Vorzugsweise ist die Rotorvorrichtung mechanisch mit einer zentralen Welle eines Rotationsabscheideelements, insbesondere einer Bürstenwalze, kraft- und/oder formschlüssig verbunden. Ferner kann vorgesehen sein, dass die Rotorvorrichtung mittels einer Getriebevorrichtung mit einem Rotationsabscheideelement gekoppelt ist. Hierdurch kann insbesondere eine hohe Drehgeschwindigkeit eines Rotors der Rotorvorrichtung in eine langsame Drehgeschwindigkeit des Rotationsabscheideelements übersetzt werden.

Die Abscheideanlage umfasst eine Regenerationsvorrichtung zur Regeneration eines Abscheideelements der Abscheideanlage.

Mittels einer Regenerationsvorrichtung einer Abscheideanlage und/oder eines Abscheidemoduls ist vorzugsweise ein Abscheideelement von abgeschiedenen Verunreinigungen befreibar. Günstig kann es sein, wenn eine Regenerationsvorrichtung eine Trocknungsvorrichtung und/oder eine mechanische Behandlungsvorrichtung umfasst.

Eine Trocknungsvorrichtung dient vorzugsweise dem Trocknen von auf einem Abscheideelement abgeschiedenen Verunreinigungen.

Auf einem Abscheideelement abgeschiedene Verunreinigungen sind mittels einer Trocknungsvorrichtung einer Regenerationsvorrichtung vorzugsweise durch Wärmeeinwirkung und/oder Kälteeinwirkung in einen trockenen Zustand bringbar.

Der trockene Zustand kann dabei ein Zustand sein, in welchem flüssige Bestandteile der Verunreinigungen verdampft und/oder entfernt sind.

Alternativ oder ergänzend hierzu kann vorgesehen sein, dass ein trockener Zustand ein Zustand ist, in welchem zunächst flüssige Bestandteile der Verunreinigungen durch chemische und/oder physikalische Umwandlung, insbesondere durch Gefrieren, in einen festen Aggregatzustand übergegangen sind.

Beispielsweise kann vorgesehen sein, dass die Verunreinigungen durch das Trocknen verspröden und somit im Vergleich zu einem vorherigen feuchten Zustand leichter von dem Abscheideelement entfernbar sind.

Eine mechanische Behandlungsvorrichtung umfasst vorzugsweise ein oder mehrere mechanische Abstreifer und/oder dient vorzugsweise zum Abstreifen von, insbesondere getrockneten, Verunreinigungen von einem Abscheideelement.

Günstig kann es sein, wenn ein Abscheidemodul eine Regenerationsvorrichtung umfasst.

Ferner kann vorgesehen sein, dass eine Regenerationsvorrichtung eine von einem Abscheidemodul separate mobile oder stationäre Vorrichtung ist.

Beispielsweise kann eine Regenerationsvorrichtung als ein Regenerationsmodul ausgebildet sein.

Ein Regenerationsmodul ist vorzugsweise ein von dem einen oder den mehreren Abscheidemodulen verschiedenes Modul.

Ein oder mehrere Abscheidemodule sind vorzugsweise mobil ausgebildet und zur Regeneration von Abscheideelementen des jeweiligen Abscheidemoduls an ein Regenerationsmodul heranfahrbar und/oder ankoppelbar.

Ein Regenerationsmodul bildet oder umfasst vorzugsweise eine oder mehrere Modulaufnahmen zur Aufnahme von genau einem oder mehreren Abscheidemodulen.

Eine mittels eines Regenerationsmoduls gebildete oder von einem Regenerationsmodul umfasste Modulaufnahme ist vorzugsweise eine von einer Grundkonstruktion der Abscheideanlage verschiedene und/oder beabstandet angeordnete Modulaufnahme.

Ein Regenerationsmodul umfasst vorzugsweise eine Trocknungsvorrichtung, eine Applikationsvorrichtung, eine mechanische Behandlungsvorrichtung und/oder eine Abstreifvorrichtung.

Die Trocknungsvorrichtung, die Applikationsvorrichtung, die mechanische Behandlungsvorrichtung und/oder die Abstreifvorrichtung sind vorzugsweise automatisiert und/oder automatisch betätigbar.

Alternativ oder ergänzend hierzu können eine manuelle Trocknung, eine manuelle Applikation, eine manuelle mechanische Behandlung und/oder ein manuelles Abstreifen vorgesehen sein.

Ein Regenerationsmodul umfasst vorzugsweise eine Modulaufnahme zur Aufnahme eines Abscheidemoduls, wobei ein Innenraum des Regenerationsmoduls vorzugsweise durch die Modulaufnahme hindurch zugänglich ist.

Ein Regenerationsmodul umfasst ferner vorzugsweise eine Heizvorrichtung, eine Kühlvorrichtung und/oder eine Luftzuführung zur Zuführung von Luft, insbesondere Heißluft oder Kaltluft, zu dem Innenraum des Regenerationsmoduls.

Vorzugsweise ist ein mittels der Luftzuführung in den Innenraum des Regenerationsmoduls geführter Luftstrom auf die Modulaufnahme und/oder ein an der Modulaufnahme angeordnetes und/oder aufgenommenes Abscheidemodul gerichtet oder richtbar. Insbesondere können hierdurch an einem oder mehreren Abscheideelementen des Abscheidemoduls anhaftende Verunreinigungen getrocknet und/oder versprödet werden.

Das Regenerationsmodul umfasst vorzugsweise einen Auffangbehälter, insbesondere eine Auffangwanne, zum Auffangen von Verunreinigungen, welche insbesondere von der Abscheidevorrichtung abgereinigt oder sonst wie entfernt werden oder wurden.

Das Regenerationsmodul umfasst ferner vorzugsweise eine Luftabführung zur Abführung von Abluft aus dem Innenraum der Regenerationsvorrichtung.

Ferner kann eine stationäre Regenerationsvorrichtung vorgesehen sein, welcher Abscheideelemente und/oder Abscheidemodule zur Regeneration zuführbar sind.

Eine stationäre Regenerationsvorrichtung ist insbesondere ein stationäres Regenerationsmodul.

Vorzugsweise umfasst die Abscheideanlage ein Regenerationsmodul oder mehrere Regenerationsmodule.

Ein Regenerationsmodul umfasst oder bildet vorzugsweise eine Regenerationsvorrichtung zur Regeneration eines Abscheideelements. Das Regenerationsmodul ist insbesondere stationär und umfasst eine Modulaufnahme, an welcher ein mobiles Abscheidemodul zur Regeneration eines an oder in dem Abscheidemodul angeordneten Abscheideelements anordenbar ist.

Günstig kann es sein, wenn ein Rotationsabscheideelement als eine Bürstenwalze ausgebildet ist, welche Borsten umfasst, die eine möglichst geringe Oberflächenspannung aufweisen.

Die Borsten einer Bürstenwalze sind vorzugsweise mit einer Beschichtung versehen, beispielsweise einer Beschichtung aus einem PTFE-Material, einem FEP-Material, einem PFA-Material und/oder einem EFTE-Material.

Günstig kann es ferner sein, wenn die Borsten aus Polypropylen gebildet sind.

Rotationsabscheideelemente, insbesondere Bürstenwalzen, bieten insbesondere bei schnell trocknenden Lacken als Verunreinigungen vorzugsweise den Vorteil, dass lediglich reiner trockener Lack entsorgt werden muss. Zudem liegt vorzugsweise ein Differenzdruck eines Bürstenwalzen-Abscheidesystems deutlich unter demjenigen von Speicherfiltern oder Massenkraftabscheidern, wodurch ein Energieverbrauch der Abscheideanlage gesenkt werden kann.

Vorteilhaft kann es sein, wenn die Abscheideanlage eine Applikationsvorrichtung zur Applikation von Hilfsmaterial auf ein Abscheideelement der Abscheideanlage umfasst.

Hilfsmaterial kann beispielsweise eine lösemittelhaltige Flüssigkeit sein oder umfassen.

Alternativ oder ergänzend hierzu kann vorgesehen sein, dass Hilfsmaterial ein pulverförmiges Material, beispielsweise Steinmehl, ist oder umfasst.

Das Hilfsmaterial kann vorzugsweise als Precoatier-Material auf ein Abscheideelement aufgebracht werden, um ein permanentes Anhaften von Verunreinigungen an dem Abscheideelement zu vermeiden.

Ein mit Hilfsmaterial beschichtetes Abscheideelement kann insbesondere dadurch regeneriert werden, dass das Hilfsmaterial zusammen mit den daran angelagerten Verunreinigungen von dem Abscheideelement entfernt und durch frisches Hilfsmaterial, welches mittels der Applikationsvorrichtung appliziert wird, ersetzt wird.

Das Hilfsmaterial kann ferner eine lösemittelhaltige Flüssigkeit umfassen oder als lösemittelhaltige Flüssigkeit ausgebildet sein. Die Flüssigkeit umfasst vorzugsweise zumindest teilweise schwer flüchtige bis sehr schwer flüchtige Lösemittel.

Vorzugsweise ist die lösemittelhaltige Flüssigkeit mittels der Applikationsvorrichtung auf ein Abscheideelement applizierbar, welches als Einwegfilterelement, insbesondere als ein Massenkraftabscheider oder Speicherfilter, ausgebildet ist.

Die lösemittelhaltige Flüssigkeit ist vorzugsweise auf eine Filterstruktur eines Abscheideelements applizierbar, insbesondere durch Zerstäuben der lösemittelhaltigen Flüssigkeit.

Beispielsweise dann, wenn die Verunreinigungen Overspray eines wässrigen Lacksystems sind, kann als lösemittelhaltige Flüssigkeit eine Mischung vorgesehen sein, welche zu mindestens ungefähr 80 %, vorzugsweise mindestens ungefähr 85 %, beispielsweise ungefähr 90 %, aus Wasser besteht. Die Mischung umfasst ferner vorzugsweise mindestens ungefähr 8 %, beispielsweise mindestens ungefähr 9 %, insbesondere ungefähr 9,9 %, Butylglykol. Zudem umfasst die Mischung vorzugsweise mindestens ungefähr 0,05 %, insbesondere ungefähr 0,1 %, Amine.

Durch die Zugabe einer lösemittelhaltigen Mischung zu einem Abscheideelement kann vorzugsweise eine Viskositätserhöhung der abgeschiedenen Verunreinigungen und damit ein Trocknungsprozess (Filmbildungsprozess) auf oder an einem Abscheideelement beeinträchtigt, insbesondere verzögert, werden. Die abgeschiedenen Verunreinigungen bleiben dann vorzugsweise länger fließfähig, so dass Öffnungen oder Poren eines Abscheideelements, insbesondere eines Filterelements, länger geöffnet bleiben. Hierdurch kann vorzugsweise eine Abscheideeffizienz und/oder eine maximale Nutzungsdauer eines Abscheideelements erhöht werden.

Alternativ oder ergänzend hierzu kann vorgesehen sein, dass mittels der Applikationsvorrichtung reines Wasser auf ein oder mehrere Abscheideelemente applizierbar ist. Insbesondere bei wässrigen Verunreinigungen, insbesondere Overspray eines wässrigen Lacksystems, kann die hierdurch bewirkte Feuchtigkeitserhöhung zu einer Verschiebung des chemischen oder physikalischen Gleichgewichts und insbesondere einem langsameren Verdunsten von wässrigen Bestandteilen der Verunreinigungen führen. Dies wiederum kann eine Viskositätserhöhung der abgeschiedenen Verunreinigungen hinauszögern, verzögern oder verlangsamen.

Die Applikationsvorrichtung umfasst vorzugsweise eine oder mehrere Düsen zur Applikation von Hilfsmaterial.

Eine Düse ist vorzugsweise bezüglich einer Strömungsrichtung des Rohgasstroms stromaufwärts eines Abscheidemoduls und/oder eines Rotationsabscheideelements angeordnet. Beispielsweise ist eine Düse in einem Innenraum einer Lackierkabine positioniert.

Eine Düse der Applikationsvorrichtung ist vorzugsweise geschützt vom Rohgasstrom, insbesondere verdeckt, angeordnet. Beispielsweise kann ein Strömungsleitblech stromaufwärts einer Düse vorgesehen sein, so dass die Düse nicht oder nur geringfügig mit Rohgas angeströmt oder umströmt wird.

Als Hilfsmaterial kann ferner vorzugsweise eine Spülflüssigkeit eines Roboters oder einer manuellen Applikationseinheit vorgesehen sein.

Mittels des Roboters bzw. der manuellen Applikationseinheit kann die Spülflüssigkeit vorzugsweise direkt in ein Abscheidemodul und/oder ein Abscheideelement eingebracht, beispielsweise eingeblasen, werden. Da eine Spülflüssigkeit vorzugsweise ebenfalls schwer flüchtiges Lösemittel umfasst, kann auch hierdurch eine Verzögerung des Trocknungsprozesses der abgeschiedenen Verunreinigungen erzielt werden.

Bei einer Ausgestaltung der Erfindung kann vorgesehen sein, dass die Abscheideanlage ein Abscheideelement umfasst, welches als ein Umlenkabscheider ausgebildet ist.

Der Umlenkabscheider umfasst vorzugsweise zwei oder mehr Strömungsumlenkelemente, an welchen der Rohgasstrom zur Abscheidung von Verunreinigungen umlenkbar ist.

Der Umlenkabscheider umfasst vorzugsweise eine Bewegungsvorrichtung, mittels welcher ein Abstand zwischen den Strömungsumlenkelementen veränderbar ist.

Günstig kann es sein, wenn zumindest ein Teilbereich einer Abscheidestruktur eines Umlenkabscheiders gegenüber dem restlichen Teil verfahrbar oder verschiebbar ausgeführt ist, insbesondere mittels der Bewegungsvorrichtung. Hierdurch kann vorzugsweise eine ausreichende Abscheiderate erzielt werden. Zudem kann hierdurch vorzugsweise ein frühzeitiges Verstopfen von engen Öffnungen des Umlenkabscheiders verhindert werden.

Ein Umlenkabscheider ist insbesondere ein Massenkraftabscheider.

Vorteilhaft kann es sein, wenn mittels der Bewegungsvorrichtung ein freier Strömungsquerschnitt in dem Umlenkabscheider und somit auch ein Differenzdruck über den Umlenkabscheider hinweg im Verlauf einer Befüllung (eines Abscheidevorgangs) zumindest näherungsweise konstant gehalten wird. Eine aufwändige und störungsanfällige Volumenstromregelung zur Durchführung des Rohgasstroms durch den Umlenkabscheider kann hierdurch vorzugsweise vermieden werden.

Die Bewegungsvorrichtung und somit insbesondere ein Abstand zwischen den Strömungsumlenkelementen wird vorzugsweise unter Berücksichtigung eines Differenzdrucks zwischen einem Einlassabschnitt des Umlenkabscheiders und einem Auslassabschnitt des Umlenkabscheiders gesteuert und/oder geregelt.

Alternativ oder ergänzend hierzu kann vorgesehen sein, dass die Bewegungsvorrichtung und somit der Abstand zwischen den Strömungsumlenkelementen auf der Basis einer Partikelbeladung und/oder einer Abscheidedauer und/oder einer Gesamtmasse des Umlenkabscheiders samt der darin abgeschiedenen Verunreinigungen gesteuert und/oder geregelt wird.

Insbesondere kann die Bewegungsvorrichtung und somit der Abstand zwischen den Strömungsumlenkelementen abhängig von einer versprühten Lackmenge gesteuert und/oder geregelt werden.

Ein freier Strömungsquerschnitt innerhalb des Umlenkabscheiders ist vorzugsweise manuell, automatisch, elektrisch, mechanisch, pneumatisch und/oder hydraulisch steuerbar und/oder regelbar. Ein Antrieb zur Anpassung des freien Strömungsquerschnitts, insbesondere die Bewegungsvorrichtung, ist vorzugsweise in oder an einem Abscheidemodul und/oder in oder an einer Modulaufnahme angeordnet.

Bei einer weiteren Ausgestaltung der Erfindung kann vorgesehen sein, dass ein Volumenstrom des durch den Umlenkabscheider strömenden Gasstroms geregelt wird und dass durch den daraus resultierenden Anstieg des Unterdrucks im Laufe der Befüllung des Umlenkabscheiders der Abstand zwischen den Strömungsumlenkelementen automatisch, insbesondere durch einen anliegenden Unterdruck, eingestellt wird.

Vorzugsweise wird mittels der Bewegungsvorrichtung ein konstanter und kalkulierbarer Abscheidegrad des Umlenkabscheiders sichergestellt.

Beispielsweise kann vorgesehen sein, dass eine Ansammlung von Verunreinigungen (Partikelaufbau) im Umlenkabscheider durch eine Variation des Abstands zwischen den Strömungsumlenkelementen kompensierbar ist. Mittels der Bewegungsvorrichtung kann somit vorzugsweise nicht nur ein freier Strömungsquerschnitt, sondern auch eine gleichbleibende Strömungsführung sichergestellt werden. Beispielsweise bei einer zweimaligen Umlenkung um 90° kann durch geeignete Steuerung und/oder Regelung der Bewegungsvorrichtung ein konstanter Umlenkradius realisiert werden, so dass letztlich zumindest näherungsweise stets die gleiche Zentrifugalkraft und somit eine zumindest näherungsweise konstante Abscheiderate erhältlich sind.

Vorteilhaft kann es sein, wenn Strömungsumlenkelemente eines Umlenkabscheiders verformbar ausgebildet und/oder angeordnet sind.

Beispielsweise kann vorgesehen sein, dass ein Umlenkabscheider komprimierbare Strömungsumlenkelemente umfasst.

Die Strömungsumlenkelemente sind vorzugsweise mittels einer Steuervorrichtung derart verformbar, insbesondere komprimierbar, dass ein freier Strömungsquerschnitt des Umlenkabscheiders bei zunehmender Beladung mit Verunreinigungen im Wesentlichen konstant bleibt.

Günstig kann es sein, wenn die komprimierbaren Strömungsumlenkelemente jeweils einen Innenraum aufweisen, wobei ein im jeweiligen Innenraum herrschender Innendruck mittels einer Druckvorrichtung variabel einstellbar ist.

Vorteilhaft kann es sein, wenn mittels der Druckvorrichtung ein Innendruck im Innenraum der komprimierbaren Strömungsumlenkelemente reduzierbar ist, insbesondere auf einen unter Umgebungsdruck liegenden Druck von höchstens ungefähr 0,8 bar, beispielsweise höchstens ungefähr 0,5 bar.

Alternativ oder ergänzend hierzu kann vorgesehen sein, dass ein Innendruck im Innenraum der komprimierbaren Strömungsumlenkelemente anhebbar ist, insbesondere auf einen über Umgebungsdruck liegenden Druck von mindestens ungefähr 1,5 bar, beispielsweise mindestens ungefähr 2 bar. Der Innendruck ist vorzugsweise maximal, wenn der Umlenkabscheider unbeladen, das heißt frei von Verunreinigungen, ist. Durch gesteuerte und/oder geregelte Innendruckreduktion kann dann vorzugsweise die gewünschte Kompression der Strömungsumlenkelemente realisiert werden.

Bei einer Ausgestaltung der Erfindung kann vorgesehen sein, dass Strömungsumlenkelemente eines Umlenkabscheiders derart verformbar sind, dass eine Abscheidegeometrie der Strömungsumlenkelemente und/oder des Umlenkabscheiders variierbar ist, insbesondere zur Kompensation von einer beladungsabhängigen Strömungsquerschnittsveränderung des Umlenkabscheiders. Zudem kann hierdurch vorzugsweise ein Differenzdruck über einer Abscheidestufe, insbesondere ein Druckverlust im Umlenkabscheider, zumindest näherungsweise konstant gehalten werden. Vorteilhafterweise kann hierdurch eine Aufnahmekapazität des Abscheideelements oder der gesamten Abscheideanlage im Vergleich zu einer statischen Abscheidegeometrie deutlich vergrößert werden.

Günstig kann es sein, wenn ein Umlenkabscheider Strömungsumlenkelemente umfasst, welche jeweils eine, zwei, drei, vier oder mehr relativ zueinander bewegliche Wandungen aufweisen. Beispielsweise kann vorgesehen sein, dass zwei einander gegenüberliegende Wandungen eines jeden Strömungsumlenkelements relativ zueinander beweglich sind.

Die Wandungen begrenzen vorzugsweise einen Innenraum des jeweiligen Strömungsumlenkelements.

Vorteilhaft kann es sein, wenn die Strömungsumlenkelemente durch Relativbewegung und/oder Verformung von einer oder mehreren Wandungen eines jeden Strömungsumlenkelements verformbar, insbesondere komprimierbar, sind.

Ein oder mehrere Strömungsumlenkelemente können hinsichtlich eines Längsschnitts beispielsweise in einem Zustand mit maximalem Innendruck bogenförmig, rechteckig, dreieckig, quadratisch oder sternförmig ausgebildet sein.

Alternativ oder ergänzend hierzu kann vorgesehen sein, dass das eine oder die mehreren Strömungsumlenkelemente hinsichtlich eines Längsschnitts in einem Zustand mit minimalem Innendruck bogenförmig, rechteckig, dreieckig, quadratisch oder sternförmig ausgebildet sind.

Ein Längsschnitt ist insbesondere ein Schnitt in einer Ebene, welche durch eine Hauptströmungsrichtung des den Umlenkabscheider durchströmenden Gasstroms und durch eine senkrecht hierzu sowie parallel oder senkrecht zur Schwerkraftrichtung verlaufende Richtung aufgespannt ist.

Die Strömungsumlenkelemente sind vorzugsweise in einem regelmäßigen Muster angeordnet.

Günstig kann es sein, wenn bezüglich einer Hauptströmungsrichtung des den Umlenkabscheider durchströmenden Gasstroms aufeinanderfolgende Reihen von Strömungsumlenkelementen vorgesehen sind.

Insbesondere dann, wenn der Umlenkabscheider bogenförmige Strömungsumlenkelemente umfasst, kann vorgesehen sein, dass in der Hauptströmungsrichtung aufeinanderfolgende Reihen von Strömungsumlenkelementen alternierend in oder entgegen der Hauptströmungsrichtung geöffnete bogenförmige Strömungsumlenkelemente umfassen. Vorzugsweise folgt somit auf eine Reihe von in der Hauptströmungsrichtung geöffneten bogenförmigen Strömungsumlenkelementen eine Reihe von entgegen der Hauptströmungsrichtung geöffneten bogenförmigen Strömungsumlenkelementen, etc.

Strömungsumlenkelemente eines Umlenkabscheiders können beispielsweise aus zwei relativ zueinander beweglichen Hälften, insbesondere Halbschalen, gebildet sein.

Vorteilhaft kann es sein, wenn Strömungsumlenkelemente eines Umlenkabscheiders durch Abscheidelamellen, insbesondere bogenförmige Abscheidelamellen, gebildet sind.

In einer bevorzugten Ausführungsform umfasst jede dieser Abscheidelamellen eine anströmseitige Hälfte (stromaufwärts angeordnete Hälfte), insbesondere eine Halbschale, und eine abströmseitige Hälfte (stromabwärts angeordnete Hälfte), insbesondere Halbschale. Ein Abstand zwischen den Hälften und/oder ein von den Hälften eingeschlossenes Innenraumvolumen ist vorzugsweise mittels eines verformbaren oder veränderlichen Verbindungselements variierbar, insbesondere kontinuierlich an eine zunehmende Beladung des Umlenkabscheiders anpassbar.

Ein Verbindungselement ist beispielsweise ein Faltelement oder Faltenbalgelement, insbesondere aus einem Kunststoffmaterial. Ferner kann ein Verbindungselement beispielsweise eine Schienenvorrichtung, insbesondere eine Linearschienenvorrichtung, umfassen.

Bei einer Ausgestaltung der Erfindung kann vorgesehen sein, dass der Umlenkabscheider Strömungsumlenkelemente umfasst, welche jeweils eine formstabile Stützstruktur und eine zumindest abschnittsweise oder vollständig verformbare Außenhülle umfassen.

Die Stützstruktur stützt vorzugsweise die Außenhülle zumindest abschnittsweise ab, so dass insbesondere partiell verformbare Strömungsumlenkelemente gebildet sind.

Die Außenhülle umschließt die Stützstruktur vorzugsweise vollständig. Insbesondere wird die Stützstruktur hierdurch wirksam vor Verunreinigungen geschützt.

Die Außenhülle ist insbesondere elastisch ausgebildet.

Es kann vorgesehen sein, dass die Außenhülle ein austauschbares Einwegelement ist. Die Stützstruktur bleibt bei einem Austausch der Außenhülle vorzugsweise unverändert erhalten.

Vorteilhaft kann es sein, wenn die Außenhülle schlauchartig auf oder an der Stützstruktur festlegbar oder festgelegt ist.

Die Außenhülle bildet vorzugsweise einen Innenraum des jeweiligen Strömungsumlenkelements begrenzende Wandungen.

Vorzugsweise kann die Außenhülle durch Innendruckreduktion, insbesondere Entlüften oder Anlegen eines Unterdrucks, manuell, mechanisch, elektrisch, pneumatisch oder auch hydraulisch verformt, insbesondere komprimiert werden, vorzugsweise abhängig von der Beladung des Umlenkabscheiders.

Ferner kann vorgesehen sein, dass ein Querschnitt einer Abscheidestruktur, insbesondere der Strömungsumlenkelemente des Umlenkabscheiders, durch Strecken (Elongieren) eines elastischen Körpers im Verlauf der Abscheidung (Beladung) angepasst wird, insbesondere um somit ein frühzeitiges Verblocken der Abscheidestruktur zu verhindern.

Günstig kann es sein, wenn einem Abscheideelement eine Bypassvorrichtung zugeordnet ist.

Eine Bypassvorrichtung ist vorzugsweise im Fall eines zu stark mit Verunreinigungen beladenen Abscheideelements aktivierbar, so dass der Rohgasstrom zusätzlich oder alternativ einem weiteren Abscheideelement und/oder weiteren Abscheidebereichen desselben Abscheideelements zuführbar ist.

Mittels einer Bypassvorrichtung kann vorzugsweise ein frühzeitiges Verstopfen eines Abscheideelements, insbesondere eines Umlenkabscheiders, verhindert werden.

Vorzugsweise sind mittels einer Bypassvorrichtung verstopfte Abscheidebereiche eines Abscheideelements strömungstechnisch überbrückbar.

Günstig kann es sein, wenn mehrere Abscheidebereiche eines Abscheideelements seriell hintereinander geschaltet sind.

Die Abscheidebereiche sind vorzugsweise im Wesentlichen identisch aufgebaut oder ausgebildet.

Aufgrund einer vorrangigen Abscheidung in einem ersten Abscheidebereich wird dieser nach einer gewissen Zeit verstopft. Um zu vermeiden, dass hierdurch das gesamte Abscheideelement verstopft wird, können vorzugsweise einzelne Elemente der Abscheidebereiche mit Sollbruchstellen versehen sein.

Bei Anlegen oder Erreichen eines definierten Unterdrucks kann es zu einem Bruch dieser Sollbruchstellen kommen, wodurch insbesondere größere Öffnungen in einem gesättigten (verstopften) Abscheidebereich freigegeben werden. Dieser Abscheidebereich wird somit überbrückt.

Alternativ oder ergänzend hierzu kann vorgesehen sein, dass der Bruch der Sollbruchstellen manuell auslösbar ist. Beispielsweise kann unter Nutzung von speziellem Werkzeug am Ende eines Arbeitstages durch einen Mitarbeiter ein Bruch der Sollbruchstellen ausgelöst werden.

Ferner kann vorgesehen sein, dass der Bruch der Sollbruchstelle durch Lackablagerung und/oder Steigerung der Gewichtskraft (Masse) der abgeschiedenen Verunreinigungen verursacht wird.

Eine Bypassvorrichtung kann ferner beispielsweise manuell, pneumatisch, mechanisch und/oder elektrisch betätigt werden, insbesondere zum Überbrücken einzelner Abscheidebereiche eines Abscheideelements.

Die Betätigung der Bypassvorrichtung kann beispielsweise durch Betätigung eines Schiebers erfolgen, insbesondere ohne Verwendung von Sollbruchstellen.

Mittels eines Schiebers kann insbesondere ein weiterer oder zusätzlicher oder anderer Abscheidebereich eines Abscheideelements freigegeben werden, während ein erster verstopfter (gesättigter) Abscheidebereich strömungstechnisch überbrückt wird.

Mehrere Abscheidebereiche eines Abscheideelements können beispielsweise in Reihe geschaltet sein. Hierdurch ergibt sich insbesondere eine hohe Abscheidewirkung.

Ferner kann vorgesehen sein, dass mehrere Abscheidebereiche eines Abscheideelements parallel geschaltet sind. Hierdurch können geringe Druckverluste realisiert werden.

Die vorliegende Erfindung betrifft insbesondere ein Abscheidemodul für eine Abscheideanlage, insbesondere eine erfindungsgemäße Abscheideanlage.

Ein Abscheidemodul umfasst vorzugsweise mehrere Abscheidestufen zum Abscheiden von Verunreinigungen aus einem Rohgasstrom.

Günstig kann es sein, wenn mindestens zwei der Abscheidestufen sich hinsichtlich ihrer Funktionsweise, ihres Aufbaus und/oder ihrer Dimensionierung voneinander unterscheiden.

Günstig kann es sein, wenn das Abscheidemodul mobil ist und zum Abscheiden von Verunreinigungen aus einem durch die Abscheideanlage hindurchgeführten Rohgasstrom bedarfsweise in oder an der Abscheideanlage anordenbar ist.

Ein Regenerationsmodul ist insbesondere im Wesentlichen wie ein Abscheidemodul ausgebildet. Beispielsweise umfasst das Regenerationsmodul vorzugsweise ein Gehäuse, welches beispielsweise quaderförmig ausgebildet ist und mittels Rollenelementen verfahrbar ist.

Das Regenerationsmodul dient insbesondere der Regeneration von Abscheideelementen.

Günstig kann es sein, wenn das Regenerationsmodul eine Regenerationsvorrichtung zur Regeneration eines Abscheideelements umfasst.

Das Regenerationsmodul ist vorzugsweise mobil.

Günstig kann es sein, wenn das Regenerationsmodul zur Regeneration des Abscheideelements bedarfsweise in oder an der Abscheideanlage, in oder an einer Modulaufnahme und/oder in oder an einem Abscheidemodul anordenbar ist.

Es kann vorgesehen sein, dass ein Abscheideelement an einem Abscheidemodul und/oder an einer Modulaufnahme angeordnet ist. Nach einer gewissen Betriebsdauer ist das Abscheideelement gesättigt und muss regeneriert werden.

Hierzu ist das Regenerationsmodul vorzugsweise zu dem Abscheideelement zuführbar, beispielsweise anstelle eines Abscheidemoduls an der Modulaufnahme anordenbar.

Mittels des Regenerationsmoduls ist vorzugsweise ein Trocknungsvorgang und/oder ein mechanischer Behandlungsvorgang an dem Abscheideelement durchführbar.

Günstig kann es sein, wenn mittels des Regenerationsmoduls ein Abscheidevorgang an dem Abscheideelement gestoppt wird, beispielsweise durch Abtrennen des zu regenerierenden Abscheideelements vom Rohgasstrom durch Schließen einer Jalousieklappe. Hierdurch kann insbesondere verhindert werden, dass während der Regeneration des Abscheideelements weitere Verunreinigungen an dem Abscheideelement abgeschieden werden. Das Regenerationsmodul umfasst vorzugsweise eine Trocknungsvorrichtung zum Trocknen von Verunreinigungen an oder in dem Abscheideelement. Das Regenerationsmodul kann hierzu insbesondere mit einem Heizelement und/oder einer Luftzuführung versehen sein.

Alternativ oder ergänzend hierzu umfasst das Regenerationsmodul vorzugsweise eine mechanische Behandlungsvorrichtung, beispielsweise einen mechanischen Abstreifer. Mittels der mechanischen Behandlungsvorrichtung kann das Abscheideelement vorzugsweise von angetrockneten Verunreinigungen entfernt werden.

Die mechanische Behandlungsvorrichtung, insbesondere der mechanische Abstreifer, ist insbesondere manuell, automatisch, pneumatisch, elektrisch und/oder hydraulisch an das Abscheideelement anpressbar.

Die mechanische Behandlungsvorrichtung ist vorzugsweise relativ zu dem Abscheideelement bewegbar. Alternativ oder ergänzend hierzu kann vorgesehen sein, dass das Abscheideelement relativ zu der mechanischen Behandlungsvorrichtung bewegbar ist. Insbesondere kann vorgesehen sein, dass ein Rotationsabscheideelement rotiert wird, während ein mechanischer Abstreifer an das Rotationsabscheideelement angedrückt wird.

Von dem Abscheideelement abgereinigte Verunreinigungen werden vorzugsweise in einer Auffangwanne aufgefangen.

Die Auffangwanne ist vorzugsweise Bestandteil des Regenerationsmoduls.

Das Regenerationsmodul ist vorzugsweise als ein Regenerierwagen ausgebildet.

Das Regenerationsmodul kann beispielsweise mittels eines flexiblen Schlauchs mit Luft versorgt werden, insbesondere erwärmter Abluft eines Zwischentrockners. Die erwärmte Abluft kann insbesondere zum Trocknen von Verunreinigungen dem Abscheideelement zugeführt werden.

Das Regenerationsmodul weist vorzugsweise eine Applikationsvorrichtung auf.

Die Applikationsvorrichtung weist insbesondere einzelne oder mehrere Merkmale auf, welche im Zusammenhang mit der Applikationsvorrichtung der Abscheideanlage beschrieben sind.

Eine solche Applikationsvorrichtung kann ferner an oder in einem Abscheidemodul vorgesehen sein.

Günstig kann es sein, wenn mittels einer Applikationsvorrichtung Hilfsmaterial, beispielsweise Filterhilfsmaterial, auf ein Abscheideelement applizierbar ist.

Es kann vorgesehen sein, dass zur Regeneration eines Abscheideelements, welches an einer Modulaufnahme angeordnet ist, ein an dieser Modulaufnahme angeordnetes Abscheidemodul durch ein Regenerationsmodul ersetzt wird.

Ein Abscheideelement, welches in dem Abscheidemodul angeordnet ist, das temporär durch das Regenerationsmodul ersetzt wird, kann während der Regeneration vorzugsweise ausgetauscht, ersetzt oder ebenfalls regeneriert werden.

Die vorliegende Erfindung betrifft ferner ein Verfahren gemäß dem unabhängigen Verfahrensanspruch.

Das Verfahren umfasst Folgendes:
Anordnen eines Abscheidemoduls der Abscheideanlage an einer Modulaufnahme der Abscheideanlage;
Zuführen des Rohgasstroms zu dem Abscheidemodul und Abscheiden von Verunreinigungen aus dem Rohgasstrom mittels des Abscheidemoduls;
Regenerieren eines Abscheideelements der Abscheideanlage mittels einer Regenerationsvorrichtung.

Das Abscheideelement ist dabei vorzugsweise an oder in dem Abscheidemodul oder an oder in einer Modulaufnahme angeordnet.

Die Regenerationsvorrichtung ist dabei vorzugsweise ein Regenerationsmodul, welches anstelle eines Abscheidemoduls an der Modulaufnahme anordenbar ist.

Das Abscheidemodul ist vorzugsweise mobil und umfasst vorzugsweise ein an oder in dem mobilen Abscheidemodul angeordnetes Abscheideelement. Das mobile Abscheidemodul wird vorzugsweise zum Regenieren des Abscheideelements von der Modulaufnahme der Abscheideanlage entfernt und an einer Modulaufnahme der Regenerationsvorrichtung angeordnet.

Günstig kann es sein, wenn die Abscheideanlage eine Feinfiltrierung umfasst.

Eine solche Feinfiltrierung kann insbesondere durch eine Feinabscheidestufe realisiert sein.

Günstig kann es sein, wenn eine Feinabscheidestufe ein oder mehrere Einweg-Taschenfilterelemente umfasst, welche vorzugsweise in eine Umluftanlage der Abscheideanlage integriert sind.

Insbesondere zur Vermeidung eines regelmäßigen Filterelementwechsels ist vorzugsweise der Einsatz von mehrfach verwendbaren und/oder regenerierbaren Abscheideelementen, insbesondere Filterelementen, vorzugsweise Abreinigungsfilterelementen, vorgesehen. Diese werden insbesondere in einen Umluftkanal oder alternativ in eine Umluftanlage integriert.

Vorzugsweise ist ein variables und an ein verwendetes Lacksystem anpassbares und optimierbares Abscheidesystem vorgesehen.

Trotz der Verwendung unterschiedlicher Abscheidesysteme kann vorzugsweise ein identischer Anlagenquerschnitt vorgesehen sein. Lediglich unterschiedliche Modulaufnahmen können vorzugsweise vorgesehen sein.

Das Abscheidesystem ist vorzugsweise flexibel an sich ändernde Rahmenbedingungen, wie beispielsweise unterschiedliche Lacksysteme, Luftvolumina, etc. anpassbar.

Die Erfindung ist vorzugsweise mit geringen Investitionskosten umsetzbar.

Das Abscheidesystem ist vorzugsweise größtenteils manuell bedienbar und daher ausfallsicher.

Durch den Einsatz von regenerierbaren Abscheideelementen, insbesondere Bürstenwalzen, und/oder durch einen Verzicht auf Filterhilfsmaterial kann vorzugsweise die Abfallmenge im Betrieb der Abscheideanlage minimiert werden.

Durch gezielte Auswahl des zu bestimmten Rahmenbedingungen am besten passenden Abscheidesystems können vorzugsweise hohe Filterstandzeiten und geringe Differenzdrücke realisiert werden.

Die Erfindung eignet sich zur Verwendung in sämtlichen Lackieranlagen sowie bei Partikelabscheidevorrichtungen zur Abscheidung von Partikeln aus Gasen jedweder Art.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen vertikalen Schnitt durch eine erste Ausführungsform eines Abscheidemoduls, welches beispielsweise in einer Abscheideanlage Verwendung finden kann, wobei das Abscheidemodul eine beispielsweise elektrische Antriebsvorrichtung und eine Kopplungsvorrichtung zur Kopplung mit einer Modulaufnahme umfasst;
- Fig. 2: eine schematische Draufsicht auf eine Vorderseite einer zweiten Ausführungsform eines Abscheidemoduls, wobei das Abscheidemodul zwei als Rotationsabscheideelemente ausgebildete Abscheideelemente umfasst, welchen jeweils eine Rotorvorrichtung zum Antreiben derselben zugeordnet ist;
- Fig. 3: eine der Fig. 1 entsprechende schematische Darstellung einer dritten Ausführungsform eines Abscheidemoduls, wobei eine mechanische Abstreifvorrichtung vorgesehen ist;
- Fig. 4: eine der Fig. 1 entsprechende schematische Darstellung einer vierten Ausführungsform eines Abscheidemoduls, wobei eine Applikationsvorrichtung zum Applizieren von Hilfsmaterial auf ein Abscheideelement vorgesehen ist;
- Fig. 5: einen schematischen horizontalen Querschnitt durch eine fünfte Ausführungsform eines Abscheidemoduls, wobei das Abscheidemodul zwei als drehbare Prallabscheider ausgebildete Rotationsabscheideelemente umfasst;
- Fig. 6: einen schematischen Schnitt durch eine alternative Ausführungsform eines Abscheideelements, wobei das Abscheideelement als ein Umlenkabscheider ausgebildet ist und eine Bewegungsvorrichtung umfasst, mittels welcher die Abstände zwischen Strömungsumlenkelementen des Umlenkabscheiders variierbar sind;
- Fig. 7: eine weitere alternative Ausführungsform eines Abscheideelements, wobei das Abscheideelement als Umlenkabscheider ausgebildet ist und eine Bypassvorrichtung umfasst, wobei die Bypassvorrichtung im geschlossenen Zustand vorliegt;
- Fig. 8: eine der Fig. 7 entsprechende schematische Darstellung des Abscheideelements aus Fig. 7, wobei Strömungsumlenkelemente des Abscheideelements mit Verunreinigungen beladen sind;
- Fig. 9: eine der Fig. 7 entsprechende schematische Darstellung des Abscheideelements aus Fig. 7, wobei die Bypassvorrichtung in einem geöffneten Zustand vorliegt;
- Fig. 10: einen schematischen Schnitt durch eine weitere alternative Ausführungsform eines Abscheideelements, wobei das Abscheideelement eine Bypassvorrichtung umfasst, die einen Schieber aufweist, wobei der Schieber in einer geschlossenen Stellung angeordnet ist;
- Fig. 11: eine der Fig. 10 entsprechende schematische Darstellung des Abscheideelements aus Fig. 10, wobei Strömungsumlenkelemente des Abscheideelements mit Verunreinigungen beladen sind;
- Fig. 12: eine der Fig. 10 entsprechende schematische Darstellung des Abscheideelements aus Fig. 10, wobei ein Schieber der Bypassvorrichtung in einer Offenstellung angeordnet ist und hierdurch ein Zugang zu weiteren Strömungsumlenkelementen des Abscheideelements freigegeben ist;
- Fig. 13: einen schematischen vertikalen Querschnitt durch eine Abscheideanlage, welche mehrere Abscheidemodule umfasst, die an Modulaufnahmen der Abscheideanlage anordenbar sind;
- Fig. 14: einen schematischen horizontalen Querschnitt durch die Abscheideanlage aus Fig. 13 längs der Linie 14-14 in Fig. 13;
- Fig. 15: eine schematische perspektivische Darstellung einer Regenerationsvorrichtung zur Regeneration von Abscheideelementen;
- Fig. 16: eine schematische Seitenansicht der Regenerationsvorrichtung aus Fig. 15;
- Fig. 17: eine der Fig. 1 entsprechende schematische Darstellung eines stationären Regenerationsmoduls und eines daran angeordneten mobilen Abscheidemoduls;
- Fig. 18: eine der Fig. 6 entsprechende schematische Darstellung einer weiteren alternativen Ausführungsform eines Umlenkabscheiders, bei welchem komprimierbare bogenförmige Strömungsumlenkelemente vorgesehen sind, wobei der Umlenkabscheider in einem unbeladenen Ausgangszustand vorliegt;
- Fig. 19: eine der Fig. 18 entsprechende schematische Darstellung des Umlenkabscheiders aus Fig. 18, wobei der Umlenkabscheider in einem teilweise mit Verunreinigungen beladenen Zustand vorliegt;
- Fig. 20: eine der Fig. 18 entsprechende schematische Darstellung des Umlenkabscheiders aus Fig. 18, wobei der Umlenkabscheider in einem teilweise beladenen Zustand vorliegt und wobei die Strömungsumlenkelemente komprimiert wurden, um einen Strömungsquerschnitt zu vergrößern;
- Fig. 21: eine der Fig. 6 entsprechende schematische Darstellung einer weiteren alternativen Ausführungsform eines Umlenkabscheiders, welcher Strömungsumlenkelemente mit einer formstabilen Stützstruktur und einer verformbaren Außenhülle umfasst, wobei der Umlenkabscheider in einem unbeladenen Ausgangszustand vorliegt;
- Fig. 22: eine der Fig. 21 entsprechende schematische Darstellung des Umlenkabscheiders aus Fig. 21, wobei der Umlenkabscheider in einem teilweise beladenen Zustand vorliegt; und
- Fig. 23: eine der Fig. 21 entsprechende schematische Darstellung des Umlenkabscheiders aus Fig. 21, wobei der Umlenkabscheider in einem teilweise beladenen Zustand vorliegt und wobei die Stützelemente durch Zusammenziehen der Außenhülle komprimiert wurden, um einen Strömungsquerschnitt des Umlenkabscheiders zu erhöhen.

Gleiche oder funktional äquivalente Elemente sind in sämtlichen Figuren mit denselben Bezugszeichen versehen.

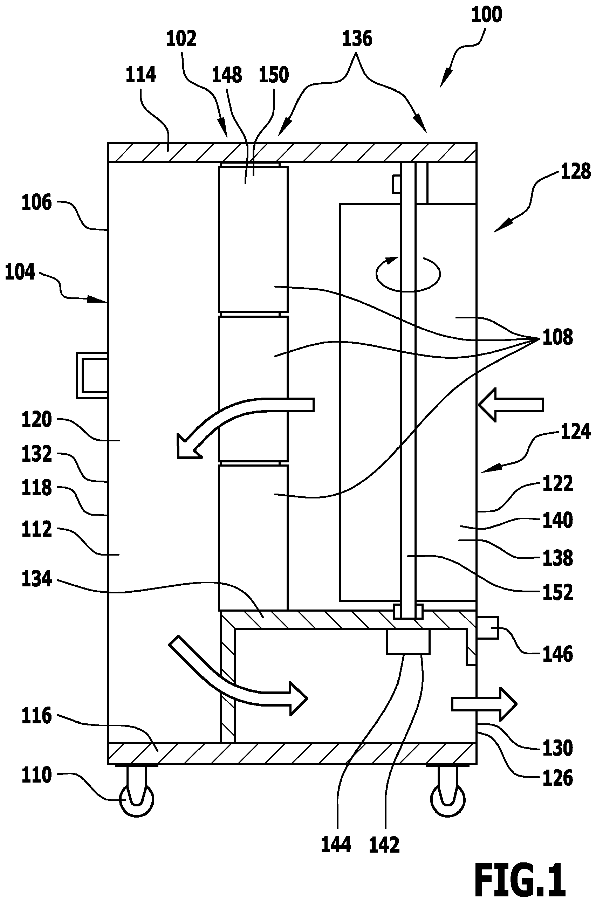

Eine in Fig. 1 dargestellte erste Ausführungsform eines als Ganzes mit 100 bezeichneten Abscheidemoduls findet beispielsweise in einer Abscheideanlage 102 Anwendung.

Ein Abscheidemodul 100 dient vorzugsweise dem Abscheiden von Verunreinigungen aus einem Rohgasstrom.

Beispielsweise ist mittels eines Abscheidemoduls 100 Lack-Overspray, welcher im Betrieb einer Lackieranlage anfällt, aus einem mit Lack-Overspray beladenen Rohgasstrom abscheidbar.

Das Abscheidemodul 100 ist insbesondere ein mobiles Abscheidemodul 100.

Beispielsweise ist das Abscheidemodul 100 als ein Transportwagen 104 ausgebildet.

Vorzugsweise umfasst das Abscheidemodul 100 ein Gehäuse 106, in welchem mindestens ein Abscheideelement 108 angeordnet ist.

Das Gehäuse 106 ist beispielsweise quaderförmig ausgebildet.

Vorzugsweise ist das Gehäuse 106 mit mindestens einem Rollenelement 110 versehen, so dass das Abscheidemodul 100 insbesondere verfahrbar oder verschiebbar ist.

Das Gehäuse 106 umgibt einen Innenraum 112 des Abscheidemoduls 100.

Dieser Innenraum 112 wird nach oben hin von einer Deckenwand 114 des Gehäuses 106 begrenzt.

Nach unten hin begrenzt eine Bodenwand 116 des Gehäuses 106 den Innenraum 112. Zudem sind eine Rückwand 118 und zwei Seitenwände 120 des Gehäuses 106 vorgesehen, welche den Innenraum 112 in horizontaler Richtung begrenzen.

Eine Vorderseite 122 des Gehäuses 106 ist vorzugsweise zumindest teilweise offen ausgebildet.

Insbesondere sind an der Vorderseite 122 eine Einströmöffnung 124 und/oder eine Ausströmöffnung 126 gebildet.

Die Einströmöffnung 124 ist insbesondere Bestandteil eines Einlassabschnitts 128 des Abscheidemoduls 100.

Durch den Einlassabschnitt 128 ist ein zu reinigender Rohgasstrom dem Innenraum 112 des Abscheidemoduls 100 zuführbar.

Die Ausströmöffnung 126 ist insbesondere Bestandteil eines Auslassabschnitts 130 des Abscheidemoduls 100. Durch den Auslassabschnitt 130 ist ein vorzugsweise mittels des Abscheidemoduls 100 gereinigter Gasstrom aus dem Innenraum 112 abführbar.

Wie insbesondere durch die Pfeile in Fig. 1 angedeutet ist, kann ein Gasstrom durch die Einströmöffnung 124 an der Vorderseite 122 des Gehäuses 106 in den Innenraum 112 einströmen. Dieser Gasstrom strömt dann insbesondere durch mindestens ein Abscheideelement 108 hindurch, beispielsweise bis zu einer der Vorderseite 122 gegenüberliegenden Rückseite 132 des Gehäuses 106.

Im Bereich der Rückseite 132 des Gehäuses 106 wird der Gasstrom vorzugsweise umgelenkt und beispielsweise unterhalb einer horizontalen Zwischenwand 134 des Gehäuses 106 nach vorne zur Vorderseite 122 geführt.

An der Vorderseite 122 wird der Gasstrom dann insbesondere durch die Ausströmöffnung 126 aus dem Innenraum 112 abgeführt.

Bei der in Fig. 1 dargestellten ersten Ausführungsform des Abscheidemoduls 100 sind vorzugsweise zwei Abscheidestufen 136 vorgesehen.

Jede Abscheidestufe 136 umfasst mindestens ein Abscheideelement 108.

Vorzugsweise sind die Abscheidestufen 136 durch Abscheideelemente 108 gebildet, welche sich hinsichtlich ihrer Funktionsweise, ihres Aufbaus und/oder ihrer Dimensionierung voneinander unterscheiden.

Eine an die Einströmöffnung 124 angrenzende Abscheidestufe 136 umfasst beispielsweise zwei Abscheideelemente 108, welche als Rotationsabscheideelemente 138 ausgebildet sind.

Die Rotationsabscheideelemente 138 sind beispielsweise als Bürstenwalzen 140 ausgebildet.

Im Betrieb des Abscheidemoduls 100 sind die Rotationsabscheideelemente 138 vorzugsweise rotierend angetrieben. Hierzu umfasst das Abscheidemodul 100 beispielsweise eine Antriebsvorrichtung 142, insbesondere eine elektrische Antriebsvorrichtung 144, beispielsweise einen Elektromotor.

Vorzugsweise ist jedem Rotationsabscheideelement 138 eine elektrische Antriebsvorrichtung 144, beispielsweise ein Elektromotor, zugeordnet.

Zur Versorgung der Antriebsvorrichtung 142 mit elektrischer Energie ist dem Abscheidemodul 100 vorzugsweise elektrische Energie zuführbar, beispielsweise von der Abscheideanlage 102.

Das Abscheidemodul 100 umfasst hierzu vorzugsweise eine Kopplungsvorrichtung 146, welche insbesondere mit einer zugehörigen Kopplungsvorrichtung 146 an einer (noch zu beschreibenden) Modulaufnahme der Abscheideanlage 102 koppelbar ist, so dass elektrische Energie von der Modulaufnahme auf das Abscheidemodul 100 übertragbar ist.

Die bezüglich der Strömungsrichtung auf die als Rotationsabscheideelemente 138 ausgebildeten Abscheideelemente 108 folgende Abscheidestufe 136 ist beispielsweise durch mehrere Abscheideelemente 108 gebildet, welche beispielsweise als Umlenkabscheider 148 oder als Tiefenfilter 150 ausgebildet sind.

Günstig kann es sein, wenn das Abscheidemodul 100 eine Abscheideelementaufnahme 152 umfasst.

Mittels der Abscheideelementaufnahme 152 kann beispielsweise ein einziges Abscheideelement 108 aufgenommen werden.

Vorzugsweise sind mittels der Abscheideelementaufnahme 152 jedoch mehrere, beispielsweise zwei, Abscheideelemente 108 aufnehmbar.

Die Abscheideelementaufnahme 152 ist dabei vorzugsweise so ausgebildet, dass diese zusammen mit daran angeordneten Abscheideelementen 108 von dem Gehäuse 106 des Abscheidemoduls 100 entfernbar und erneut an dem Gehäuse 106 des Abscheidemoduls 100 anordenbar ist.

Beispielsweise sind die Abscheideelemente 108 zusammen mit der Abscheideelementaufnahme 152 zur Regeneration der Abscheideelemente 108 aus dem Gehäuse 106 des Abscheidemoduls 100 entnehmbar und einer separaten (noch zu beschreibenden) Regenerationsvorrichtung zuführbar.

Die in Fig. 1 dargestellte Ausführungsform eines Abscheidemoduls 100 funktioniert wie folgt:
Das Abscheidemodul 100 wird vorzugsweise an einer Anlage, insbesondere einer Abscheideanlage 102, angeordnet und zwar vorzugsweise derart, dass ein mit Verunreinigungen beladener Rohgasstrom durch die Einströmöffnung 124 des Gehäuses 106 in den Innenraum 112 des Abscheidemoduls 100 führbar ist.

Das Abscheidemodul 100 wird dabei vorzugsweise ferner derart an der Anlage angeordnet, dass ein mittels des Abscheidemoduls 100 gereinigter Gasstrom über die Ausströmöffnung 126 aus dem Innenraum 112 abgeführt werden kann.

Im Betrieb des Abscheidemoduls 100 werden Verunreinigungen aus dem Rohgasstrom an den Abscheidestufen 136, insbesondere an den Abscheideelementen 108, abgeschieden.

Die als Rotationsabscheideelemente 138 ausgebildeten Abscheideelemente 108 werden hierzu mittels der Antriebsvorrichtungen 142 in Rotation versetzt, so dass insbesondere eine gleichmäßige Beaufschlagung der Rotationsabscheideelemente 138 mit Verunreinigungen gewährleistet ist.

Die Rotationsabscheideelemente 138 bilden vorzugsweise eine Hauptabscheidestufe.

Die den Rotationsabscheideelementen 138 nachgeordneten Abscheideelemente 108 bilden vorzugsweise eine Nachabscheidestufe.

Nach einer gewissen Betriebsdauer des Abscheidemoduls 100 sind die Abscheideelemente 108 mit Verunreinigungen beladen und müssen für die Gewährleistung eines weiterhin zuverlässigen Abscheidebetriebs ausgetauscht oder regeneriert werden.

Hierzu können die Rotationsabscheideelemente 138 vorzugsweise zusammen mit der Abscheideelementaufnahme 152 aus dem Gehäuse 106 des Abscheidemoduls 100 entnommen und einer Regenerationsvorrichtung zugeführt werden. In dieser Regenerationsvorrichtung werden insbesondere flüssige und klebrige Bestandteile der Verunreinigungen getrocknet. Zudem wird vorzugsweise eine mechanische Behandlung der Rotationsabscheideelemente 138 durchgeführt, um an den Rotationsabscheideelementen 138 anhaftende Verunreinigungen mechanisch abzureinigen, insbesondere abzustreifen.

Insbesondere im demontierten Zustand der Rotationsabscheideelemente 138 sind vorzugsweise die weiteren Abscheideelemente 108 zugänglich, so dass auch diese gereinigt oder ausgetauscht werden können. Beispielsweise kann es sich bei diesen Abscheideelementen 108 um Einweg-Tiefenfilter 150 handeln, welche bei Erreichen eines bestimmten Verunreinigungsgrades entsorgt und durch neue Abscheideelemente 108 ersetzt werden.

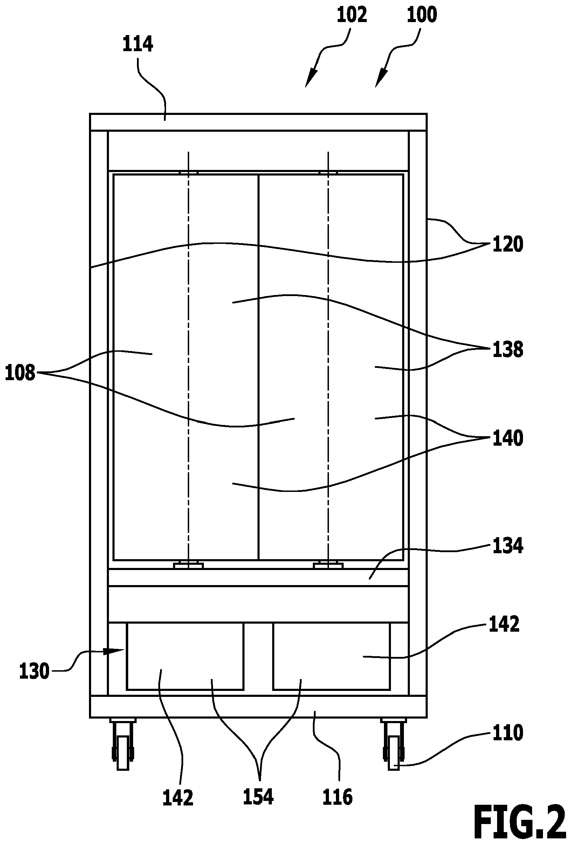

Eine in Fig. 2 dargestellte zweite Ausführungsform eines Abscheidemoduls 100 unterscheidet sich von der in Fig. 1 dargestellten ersten Ausführungsform im Wesentlichen dadurch, dass die Antriebsvorrichtung 142 mindestens eine Rotorvorrichtung 154 umfasst.

Die Rotorvorrichtung 154 ist beispielsweise als ein Darrieus-H-Rotor ausgebildet und unmittelbar oder mittels eines Getriebes mit einem Rotationsabscheideelement 138 gekoppelt.

Die Rotorvorrichtung 154 ist insbesondere im Bereich eines Auslassabschnitts 130 des Abscheidemoduls 100 angeordnet.

Mittels der Rotorvorrichtung 154 ist insbesondere ein mittels der Abscheideelemente 108 gereinigter Gasstrom zur Erzeugung von mechanischer Energie nutzbar.

Die mechanische Energie ist insbesondere zum Antreiben eines Rotationsabscheideelements 138 nutzbar.

Insbesondere durch die Verwendung eines Getriebes kann beispielsweise eine hohe Rotationsgeschwindigkeit der Rotorvorrichtung 154 umgewandelt werden in eine geringe Rotationsgeschwindigkeit des Rotationsabscheideelements 138.

Durch die Verwendung einer Rotorvorrichtung 154 als Antriebsvorrichtung 142 ist das Abscheidemodul 100 vorzugsweise autark betreibbar. Insbesondere ist keine externe Energiezufuhr erforderlich. Beispielsweise eine Kopplungsvorrichtung 146 kann dann entbehrlich sein.

Im Übrigen stimmt die in Fig. 2 dargestellte zweite Ausführungsform eines Abscheidemoduls 100 hinsichtlich Aufbau und Funktion mit der in Fig. 1 dargestellten ersten Ausführungsform überein, so dass auf deren vorstehende Beschreibung insoweit Bezug genommen wird.

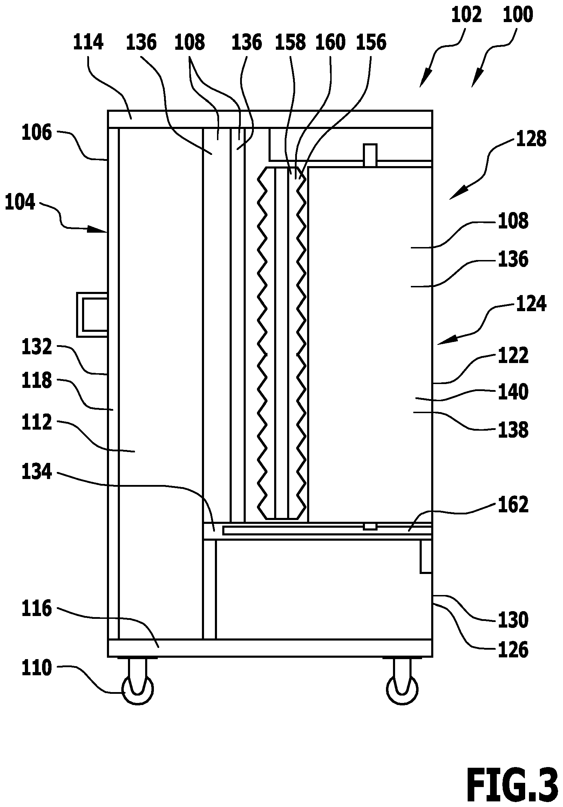

Eine in Fig. 3 dargestellte dritte Ausführungsform eines Abscheidemoduls 100 unterscheidet sich von der in Fig. 1 dargestellten ersten Ausführungsform im Wesentlichen dadurch, dass das Abscheidemodul 100 eine Regenerationsvorrichtung 156 umfasst.

Die Regenerationsvorrichtung 156 umfasst insbesondere eine mechanische Behandlungsvorrichtung 158 zur Behandlung eines Abscheideelements 108, insbesondere eines Rotationsabscheideelements 138.

Die mechanische Behandlungsvorrichtung 158 ist beispielsweise als eine Abstreifvorrichtung 160 ausgebildet und relativ zu einem Rotationsabscheideelement 138 bewegbar.

Günstig kann es sein, wenn die Abstreifvorrichtung 160 als ein Schiebeelement ausgebildet ist, welches auf ein Rotationsabscheideelement 138 zubewegbar und mit demselben mechanisch in Eingriff bringbar ist.

Die Abstreifvorrichtung 160 ist vorzugsweise mit Borsten eines als Bürstenwalze 140 ausgebildeten Rotationsabscheideelements 138 in Eingriff bringbar, um an den Borsten anhaftende Verunreinigungen abstreifen zu können.

Diese abgestreiften Verunreinigungen fallen insbesondere in der Schwerkraftrichtung nach unten.

Zum Auffangen dieser abgereinigten Verunreinigungen umfasst das Abscheidemodul 100 vorzugsweise eine Auffangwanne 162.

Die Auffangwanne 162 ist insbesondere unter der Abstreifvorrichtung 160 und/oder unter dem Rotationsabscheideelement 138 angeordnet.

Zudem ist bei der in Fig. 3 dargestellten dritten Ausführungsform des Abscheidemoduls 100 vorzugsweise vorgesehen, dass zwei Abscheidestufen 136 auf die durch Rotationsabscheideelemente 138 gebildete Abscheidestufe 136 folgen. Insgesamt sind somit drei Abscheidestufen 136 vorgesehen.

Im Übrigen stimmt die in Fig. 3 dargestellte dritte Ausführungsform eines Abscheidemoduls 100 hinsichtlich Aufbau und Funktion mit der in Fig. 1 dargestellten ersten Ausführungsform überein, so dass auf deren vorstehende Beschreibung insoweit Bezug genommen wird.

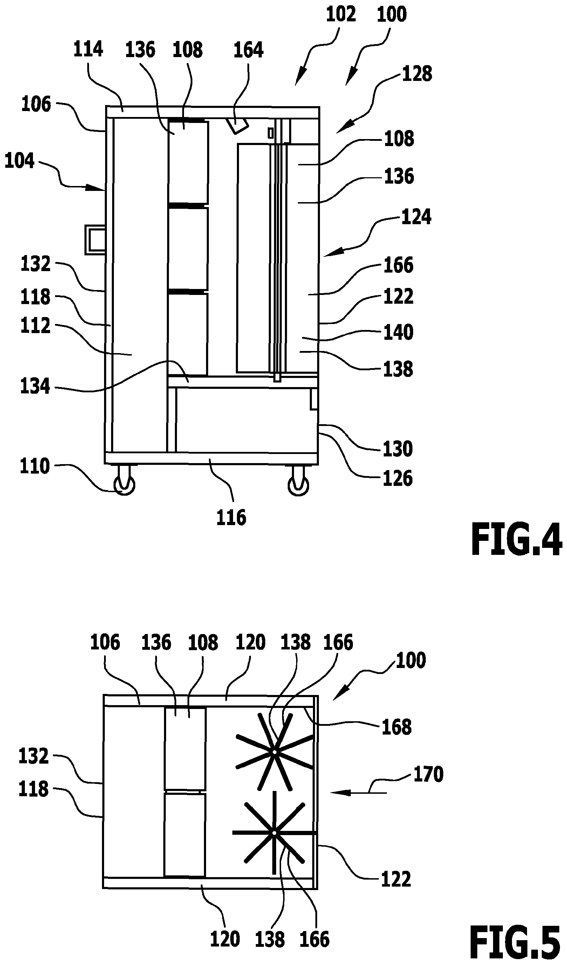

Eine in Fig. 4 dargestellte vierte Ausführungsform eines Abscheidemoduls 100 unterscheidet sich von der in Fig. 1 dargestellten ersten Ausführungsform im Wesentlichen dadurch, dass das Abscheidemodul 100 eine Applikationsvorrichtung 164 umfasst. Mittels einer Applikationsvorrichtung 164 ist insbesondere ein Hilfsmaterial auf einzelne oder mehre Elemente des Abscheidemoduls 100 applizierbar.

Das Hilfsmaterial kann beispielsweise ein Reinigungsmedium zum Abreinigen von Verunreinigungen oder auch ein Filterhilfsmaterial zur Optimierung einer Abscheidewirkung sein. Ferner kann das Hilfsmaterial ein Beschichtungsmedium sein, welches auf ein Abscheideelement 108 applizierbar ist, um eine Schutzschicht an dem Abscheideelement 108 zu bilden und somit einem unerwünschten permanenten Anhaften von Verunreinigungen an dem Abscheideelement 108 vorzubeugen. Vorzugsweise ist dieses Hilfsmaterial zusammen mit daran anhaftenden Verunreinigungen einfach von einem Abscheideelement 108 entfernbar.

Das Rotationsabscheideelement 138 kann bei der in Fig. 4 dargestellten vierten Ausführungsform des Abscheidemoduls 100 als Bürstenwalze 140 ausgebildet sein. Es kann jedoch auch vorgesehen sein, dass das Rotationsabscheideelement 138 als ein drehbarer Prallabscheider 166 ausgebildet ist.

Ein drehbarer Prallabscheider 166 ist insbesondere ein Rotationsabscheideelement 138, welches beispielsweise mehrere sternförmig von einer Zentralachse nach außen ragende Plattenelemente aufweist.

Im Übrigen stimmt die in Fig. 4 dargestellte vierte Ausführungsform eines Abscheidemoduls 100 hinsichtlich Aufbau und Funktion mit der in Fig. 1 dargestellten ersten Ausführungsform überein, so dass auf deren vorstehende Beschreibung insoweit Bezug genommen wird.

Eine in Fig. 5 dargestellte fünfte Ausführungsform eines Abscheidemoduls 100 unterscheidet sich von der in Fig. 1 dargestellten ersten Ausführungsform im Wesentlichen dadurch, dass zwei als drehbare Prallabscheider 166 ausgebildete Rotationsabscheideelemente 138 vorgesehen sind.

Diese drehbaren Prallabscheider 166 sind insbesondere in einer Rahmenvorrichtung 168 des Abscheidemoduls 100 aufgenommen.

Die Rahmenvorrichtung 168 umgibt die drehbaren Prallabscheider 166 vorzugsweise in sämtlichen senkrecht zu einer Einströmrichtung 170 verlaufenden Richtungen, zumindest jedoch vorzugsweise im Bereich der Seitenwände 120 des Gehäuses 106.

Die Rahmenvorrichtung 168 dient vorzugsweise ebenfalls der Abscheidung von Verunreinigungen aus dem Rohgasstrom, da diese Rahmenvorrichtung 168 im Betrieb des Abscheidemoduls 100 durch das Umströmen der drehbaren Prallabscheider 166 mit verunreinigtem Rohgas angeströmt wird und sich dabei Verunreinigungen auf der Rahmenvorrichtung 168 ablagern.

Die Rahmenvorrichtung 168 kann beispielsweise eine Abscheideelementaufnahme 152 zur Aufnahme eines oder beider Rotationsabscheideelemente 138 sein.

Es kann jedoch auch vorgesehen sein, dass die Rahmenvorrichtung 168 eine von der Abscheideelementaufnahme 152 verschiedene Vorrichtung ist.

Im Übrigen stimmt die in Fig. 5 dargestellte fünfte Ausführungsform eines Abscheidemoduls 100 hinsichtlich Aufbau und Funktion mit der in Fig. 4 dargestellten vierten Ausführungsform überein, so dass auf deren vorstehende Beschreibung insoweit Bezug genommen wird.

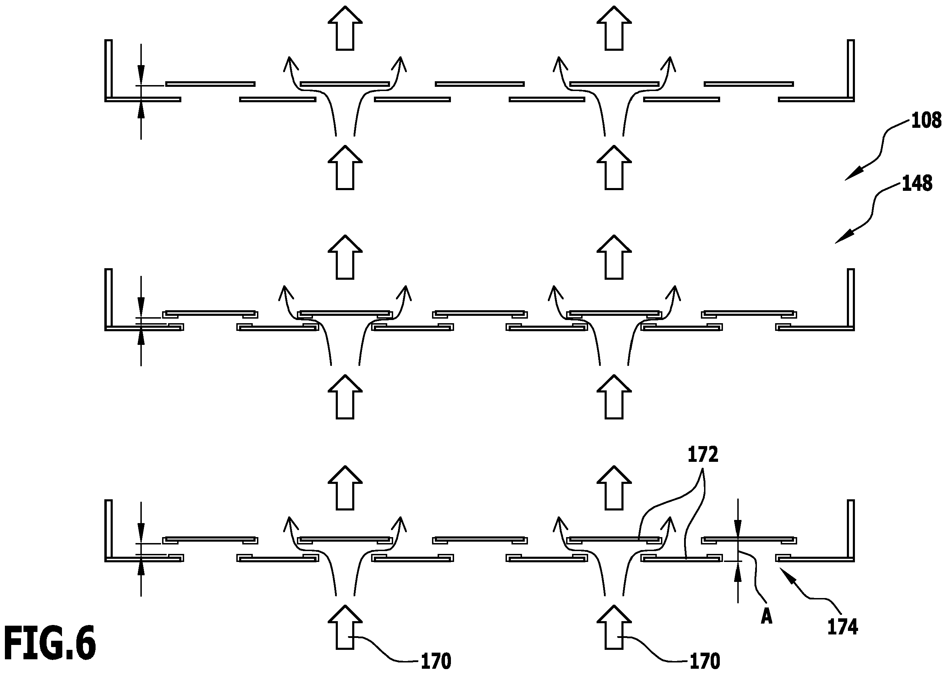

In Fig. 6 ist eine alternative Ausführungsform eines Abscheideelements 108 dargestellt.

Dieses Abscheideelement 108 ist insbesondere ein Umlenkabscheider 148.

Der Umlenkabscheider 148 ermöglicht vorzugsweise eine Abscheidung von Verunreinigungen durch Umlenken des mit Verunreinigungen beladenen Rohgasstroms.

Hierzu umfasst der Umlenkabscheider 148 vorzugsweise mehrere Strömungsumlenkelemente 172.

In den Bereichen der Strömungsumlenkung lagert sich im Benutzungszustand des Umlenkabscheiders 148 eine zunehmende Menge von Verunreinigungen an. Hierdurch wird insbesondere ein Strömungsquerschnitt im Laufe der Zeit reduziert.

Der Umlenkabscheider 148 umfasst daher vorzugsweise eine Bewegungsvorrichtung 174, mittels welcher ein Abstand A zwischen den Strömungsumlenkelementen 172 variierbar ist.

Insbesondere ist mittels der Bewegungsvorrichtung 174 ein Abstand A zwischen den Strömungsumlenkelementen 172 an einen Beladungsgrad des Umlenkabscheiders 148 anpassbar, so dass insbesondere im Wesentlichen unabhängig von der Beladung mit Verunreinigungen ein konstanter Strömungsquerschnitt aufrechterhalten werden kann. Der Umlenkabscheider 148 weist dann insbesondere auch nach längerer Betriebsdauer einen geringen Druckverlust auf.

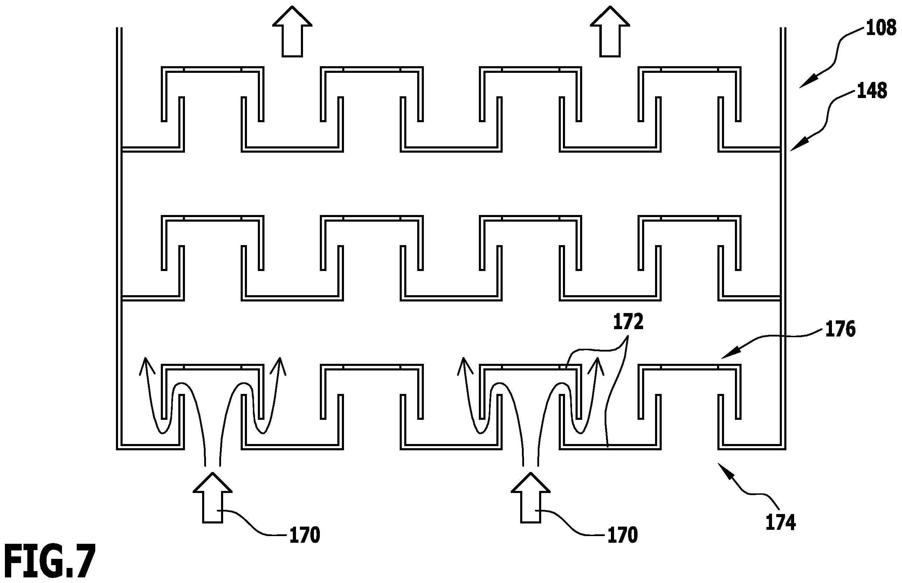

In den Fig. 7 bis 9 ist eine weitere alternative Ausführungsform eines Abscheideelements 108 dargestellt.

Auch dieses Abscheideelement 108 ist als ein Umlenkabscheider 148 ausgebildet.

Die Strömungsumlenkelemente 172 weisen vorzugsweise einen C-förmigen Querschnitt auf, so dass eine mehrfache Strömungsumlenkung zwischen zwei Strömungsumlenkelementen 172 erfolgen muss, um diese mit dem Rohgasstrom zu umströmen.

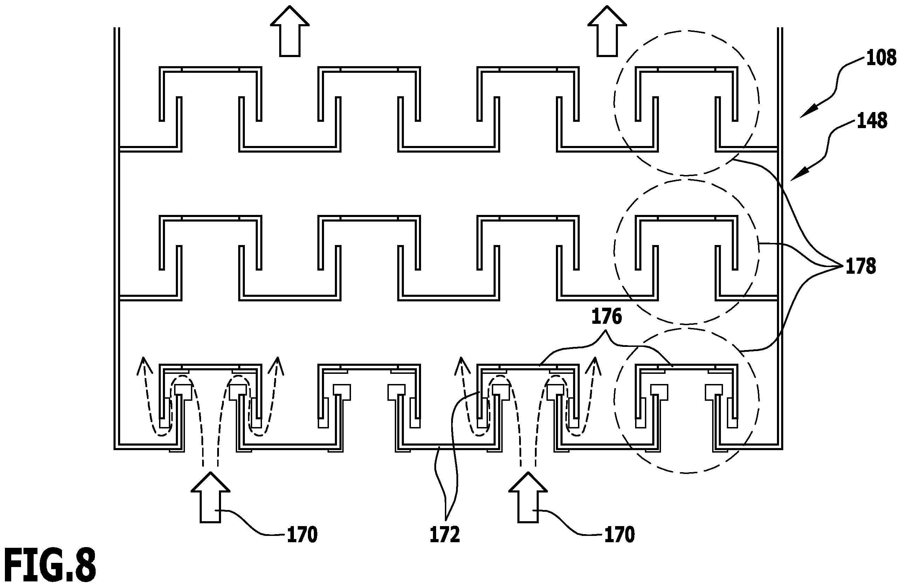

Wie insbesondere Fig. 8 zu entnehmen ist, lagern sich auch bei dieser Ausführungsform des Umlenkabscheiders 148 Verunreinigungen an den Strömungsumlenkelementen 172 an, wodurch sich ein Strömungsquerschnitt reduzieren kann.

Die in den Fig. 7 bis 9 dargestellte Ausführungsform eines Abscheideelements 108 umfasst vorzugsweise eine Bypassvorrichtung 176, mittels welcher der zu reinigende Rohgasstrom bei Bedarf gezielt an zu stark verunreinigten Bereichen des Abscheideelements 108 vorbeigeführt werden kann.

Der Umlenkabscheider 148 kann dabei insbesondere mehrere bezüglich einer Durchströmungsrichtung parallel zu einander angeordnete Abscheidebereiche 178 aufweisen.

Vorzugsweise sind jedoch auch mehrere in Reihe hintereinander angeordnete Abscheidebereiche 178 vorgesehen.

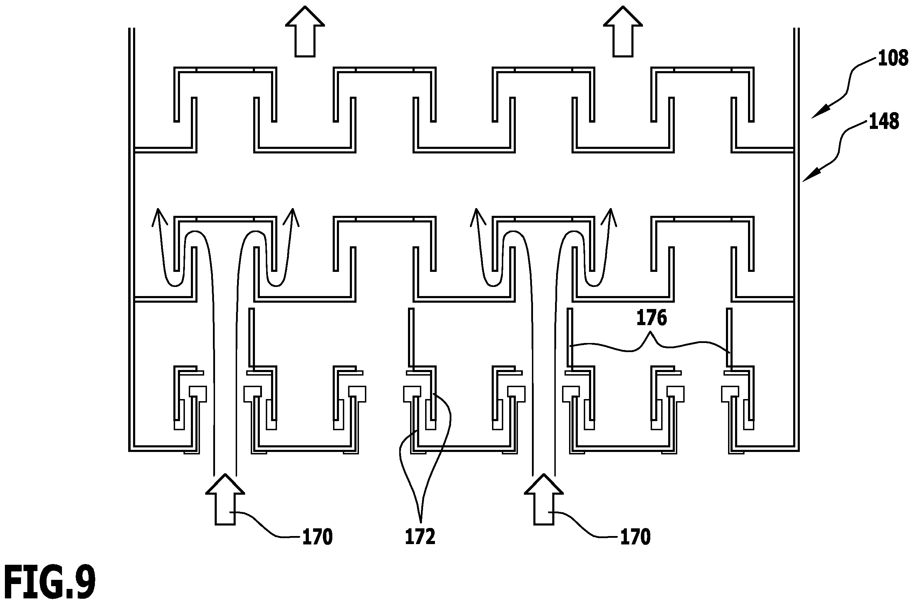

Wie insbesondere aus einem Vergleich der Fig. 8 und 9 hervorgeht, kann bei zu starker Verunreinigung eines stromaufwärts angeordneten Abscheidebereichs 178 vorzugsweise eine Bypassvorrichtung 176 aktiviert werden, so dass der zu reinigende Rohgasstrom in diesem stark verunreinigten Abscheidebereich 178 nicht weiter umgelenkt, sondern direkt einem stromabwärts angeordneten weiteren Abscheidebereich 178 zugeführt wird.

Die Bypassvorrichtung 176 kann beispielsweise passiv ausgebildet sein. Eine Aktivierung der Bypassvorrichtung 176 erfolgt dann insbesondere automatisch bei zu starkem Druckunterschied (Druckabfall) im Umlenkabscheider 148. Hierzu können insbesondere Strömungsumlenkelemente 172 mit Sollbruchstellen, Klappen, oder ähnliches vorgesehen sein.

Ferner kann vorgesehen sein, dass die Bypassvorrichtung 176 aktiv betätigbar ist. Hierbei sind insbesondere manuell Klappen in Strömungsumlenkelementen 172 betätigbar.

Im Übrigen stimmt die in den Fig. 7 bis 9 dargestellte Ausführungsform eines Abscheideelements 108 hinsichtlich Aufbau und Funktion mit der in Fig. 6 dargestellten Ausführungsform überein, so dass auf deren vorstehende Beschreibung insoweit Bezug genommen wird.

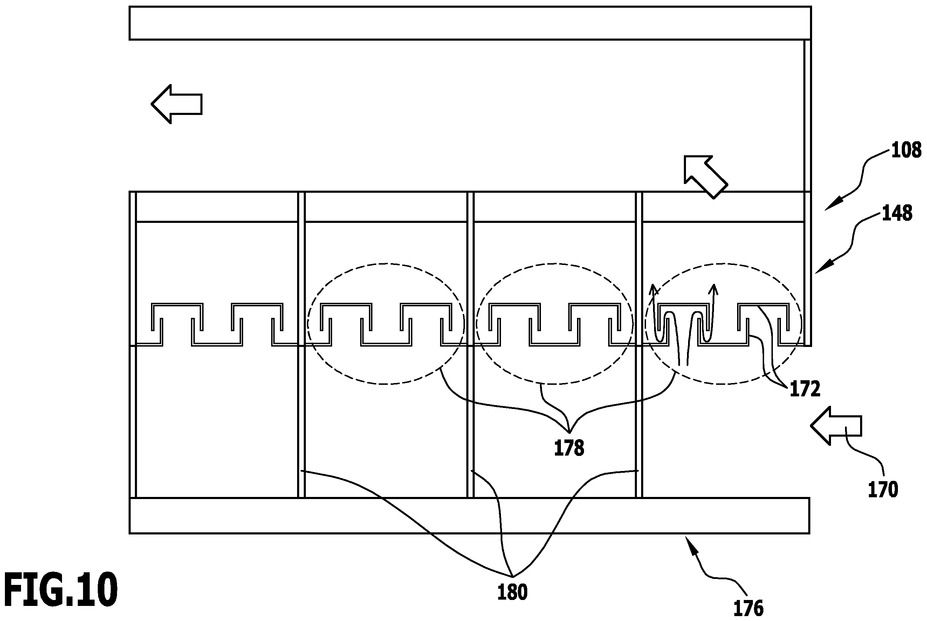

Eine in den Fig. 10 bis 12 dargestellte weitere alternative Ausführungsform eines Abscheideelements 108 unterscheidet sich von der in den Fig. 7 bis 9 dargestellten Ausführungsform im Wesentlichen dadurch, dass die Bypassvorrichtung 176 als eine parallele Bypassvorrichtung 176 ausgebildet ist.

Insbesondere sind hierbei ein oder mehrere Schieber 180 oder sonstige Verschlusselemente vorgesehen, welche mehrere parallel zueinander angeordnete und parallel zueinander durchströmbare Abscheidebereiche 178 des Umlenkabscheiders 148 voneinander trennen.

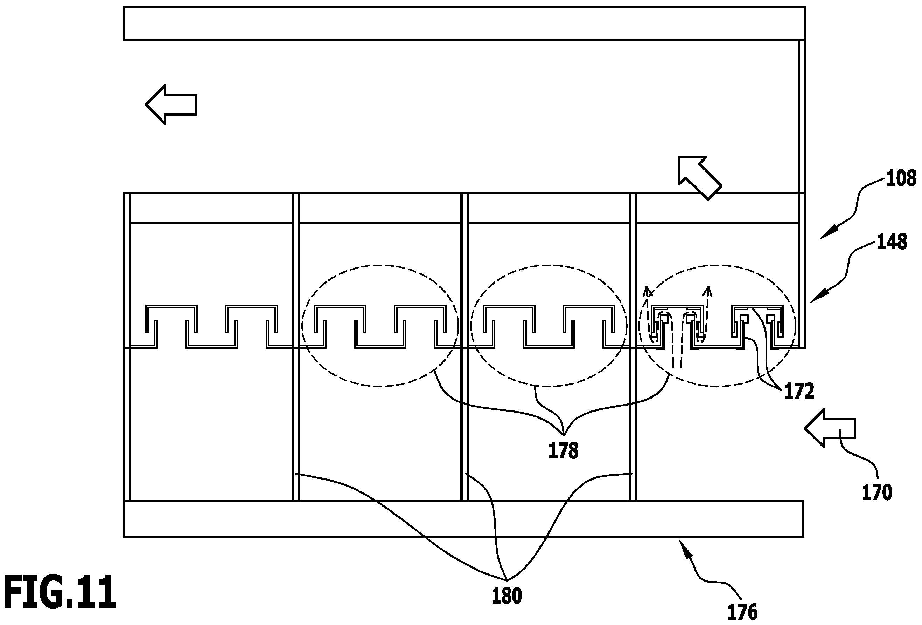

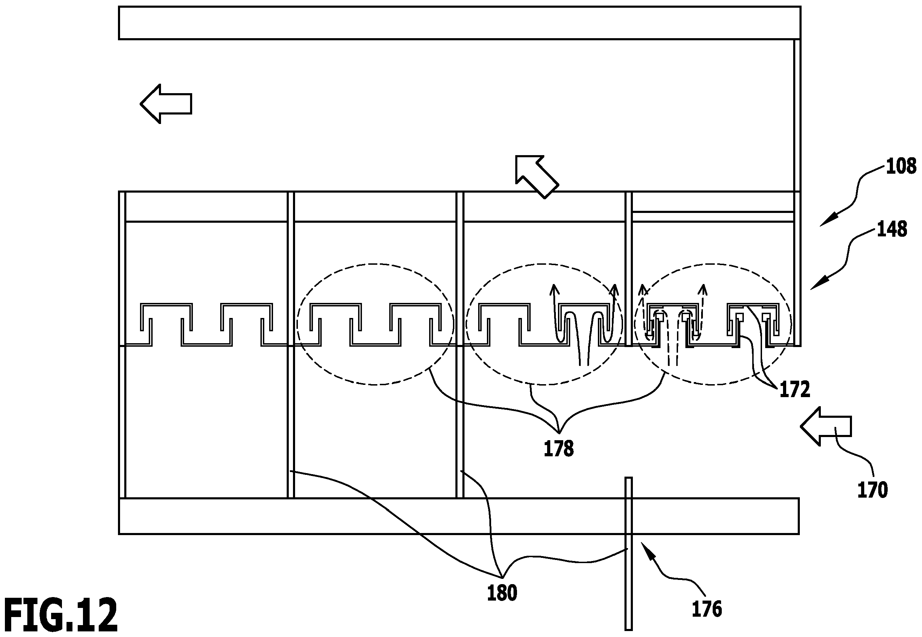

Wird nun ein zunächst mit dem Rohgasstrom durchströmter Abscheidebereich 178 zu stark mit Verunreinigungen beladen (siehe Fig. 11), ist vorzugsweise die Bypassvorrichtung 176 aktivierbar (siehe Fig. 12). Insbesondere ist ein Schieber 180, welcher zwei Abscheidebereiche 178 voneinander trennt, entfernbar, um parallel zu dem ersten Abscheidebereich 178 angeordnete weitere Abscheidebereiche 178 freizugeben.

Auch hierdurch können eine gleichmäßige Durchströmung des Umlenkabscheiders 148 und eine konstant hohe Abscheiderate realisiert werden.

Im Übrigen stimmt die in den Fig. 10 bis 12 dargestellte Ausführungsform eines Abscheideelements 108 hinsichtlich Aufbau und Funktion mit der in den Fig. 7 bis 9 dargestellten Ausführungsform überein, so dass auf deren vorstehende Beschreibung insoweit Bezug genommen wird.

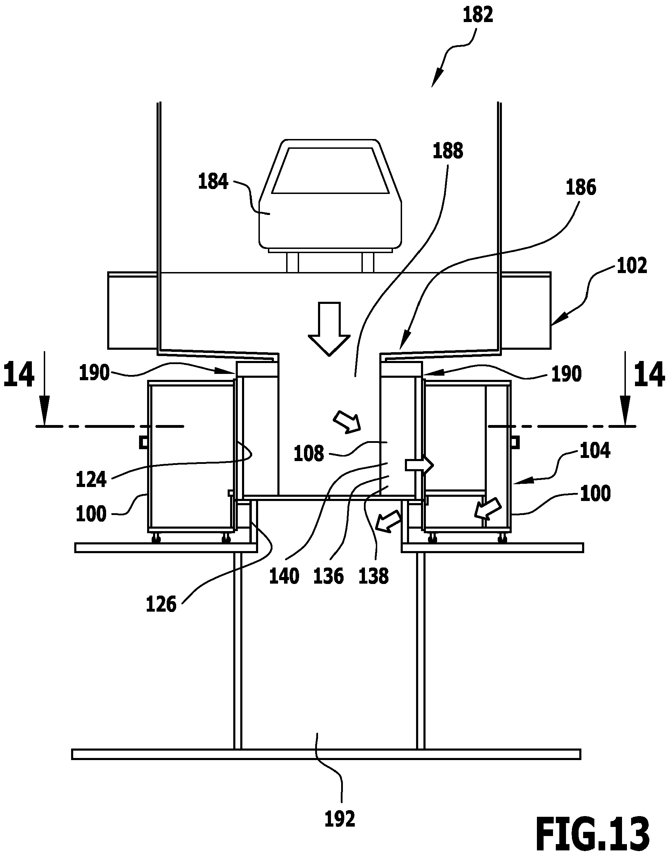

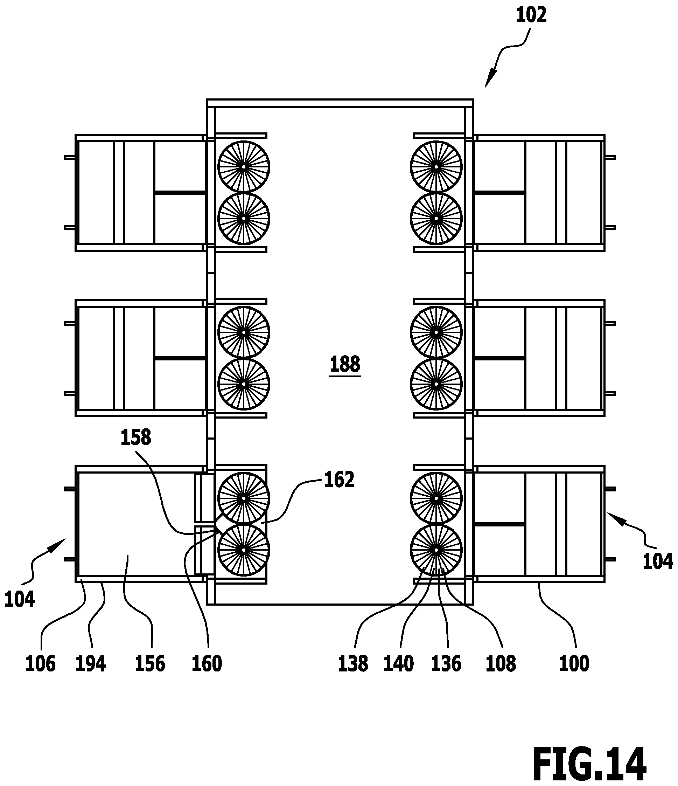

In den Fig. 13 und 14 ist exemplarisch eine Abscheideanlage 102 dargestellt, bei welcher ein Abscheidemodul 100 verwendet werden kann.

Die Abscheideanlage 102 schließt sich dabei beispielsweise an eine Lackieranlage 182 zum Lackieren von Werkstücken 184 an und dient der Abreinigung von Lack-Overspray aus einem mit Lack-Overspray beladenen Gasstrom.

Die Abscheideanlage 102 umfasst eine Grundkonstruktion 186, welche insbesondere einen Rohgaskanal 188 und mindestens eine Modulaufnahme 190 umfasst.

Mittels des Rohgaskanals 188 ist insbesondere ein mit Verunreinigungen beladener Rohgasstrom aus der Lackieranlage 182 zu einer oder mehreren Modulaufnahmen 190 zuführbar.

Die Modulaufnahmen 190 dienen der Aufnahme von Abscheidemodulen 100.

Insbesondere ist jeweils ein Abscheidemodul 100 an einer Modulaufnahme 190 anordenbar.

Die Grundkonstruktion 186 umfasst ferner einen Reingaskanal 192, welchem ein durch Reinigung des Rohgasstroms mittels der Abscheidemodule 100 erhältlicher Reingasstrom zuführbar ist.

Die Abscheidemodule 100 sind insbesondere derart an den Modulaufnahmen 190 anordenbar, dass der Rohgaskanal 188 an die Einströmöffnungen 124 der Abscheidemodule 100 angrenzt. Zugleich grenzt vorzugsweise der Reingaskanal 192 an die Ausströmöffnungen 126 der Abscheidemodule 100.

Die Abscheidemodule 100 sind insbesondere als Transportwagen 104 ausgebildet und somit mobil.

Ein Abscheidemodul 100 kann somit wahlweise an einer Modulaufnahme 190 angeordnet oder von derselben entfernt werden.

Vorzugsweise bildet ein Abscheidemodul 100 eine Fluidverbindung zwischen dem Rohgaskanal 188 und dem Reingaskanal 192.

Günstig kann es sein, wenn mehrere Abscheidemodule 100 mehrere im Wesentlichen unabhängig voneinander herstellbare und trennbare Fluidverbindungen zwischen dem Rohgaskanal 188 und dem Reingaskanal 192 bilden.

Vorteilhaft kann es sein, wenn eine Modulaufnahme 190 und/oder ein Abscheidemodul 100 eine (nicht dargestellte) Verschlussvorrichtung umfasst, insbesondere um beim Entfernen eines Abscheidemoduls 100 von einer Modulaufnahme 190 ein unerwünschtes Austreten des Rohgasstroms im Bereich der Modulaufnahme 190 zu vermeiden.

Bei der in Fig. 13 und 14 dargestellten Ausführungsform der Abscheideanlage 102 sind Abscheideelemente 108 in den Abscheidemodulen 100 angeordnet.

Fakultativ kann ferner vorgesehen sein, dass eine Modulaufnahme 190 mindestens ein Abscheideelement 108 umfasst.

Beispielsweise kann vorgesehen sein, dass an jeder Modulaufnahme 190 zwei Abscheideelemente 108 angeordnet sind.

Diese Abscheideelemente 108 sind beispielsweise als Rotationsabscheideelemente 138, insbesondere als Bürstenwalzen 140, ausgebildet.

Vorzugsweise sind diese Abscheideelemente 108 stationär an der Grundkonstruktion 186 vorgesehen. Es kann jedoch auch vorgesehen sein, dass diese Abscheideelemente 108 mittels einer Abscheideelementaufnahme 152 an der Grundkonstruktion 186 angeordnet und zusammen mit der Abscheideelementaufnahme 152 bei Bedarf entnehmbar und insbesondere regenerierbar sind.

Beispielsweise dann, wenn die Abscheideelemente 108 permanent an der Grundkonstruktion 186 angeordnet sind, kann es vorgesehen sein, dass eine Regenerationsvorrichtung 156 ebenfalls an der Grundkonstruktion 186 angeordnet ist.

Die Regenerationsvorrichtung 156 kann dabei insbesondere ähnlich der in Fig. 3 dargestellten Regenerationsvorrichtung 156 ausgebildet sein.

Ferner kann vorgesehen sein, dass eine mobile Regenerationsvorrichtung 156 zur Regeneration der Abscheideelemente 108 verwendet wird.

Eine solche mobile Regenerationsvorrichtung 156 kann beispielsweise ein Regenerationsmodul 194 sein.

Wie insbesondere Fig. 14 zu entnehmen ist, kann ein solches Regenerationsmodul 194 im Wesentlichen einem Abscheidemodul 100 entsprechen.

Insbesondere kann ein Regenerationsmodul 194 ein Gehäuse 106 umfassen, welches mittels Rollenelementen 110 verfahrbar oder verschiebbar ist (siehe beispielsweise Fig. 1).

Auch ein Regenerationsmodul 194 kann somit beispielsweise als ein Transportwagen 104 ausgebildet sein.

Anstelle oder zusätzlich zu Abscheideelementen 108 ist bei einem Regenerationsmodul 194 jedoch vorzugsweise eine Regenerationsvorrichtung 156 vorgesehen.

Das Regenerationsmodul 194 ist vorzugsweise ebenso wie ein Abscheidemodul 100 an einer Modulaufnahme 190 anordenbar.

Insbesondere ist ein Regenerationsmodul 194 zur Regeneration von an der Modulaufnahme 190 angeordneten Abscheideelementen 108 an der Modulaufnahme 190 anordenbar.

Die in den Fig. 13 und 14 dargestellte Ausführungsform einer Abscheideanlage 102 funktioniert beispielsweise wie folgt:
In einem Abscheidebetrieb der Abscheideanlage 102 sind mehrere, vorzugsweise alle, Modulaufnahmen 190 mit Abscheidemodulen 100 bestückt. Die Abscheidemodule 100 und die in den Modulaufnahmen 190 angeordneten Abscheideelemente 108 werden dabei von dem aus der Lackieranlage 182 stammenden Gasstrom durchströmt und reinigen diesen.

Nach einer gewissen Betriebsdauer der Abscheideanlage 102 sind insbesondere die Abscheideelemente 108, welche in den Modulaufnahmen 190 angeordnet sind, stark mit Verunreinigungen beladen und müssen daher regeneriert werden.

Hierzu wird insbesondere ein Abscheidemodul 100 nach dem anderen temporär von der jeweiligen Modulaufnahme 190 entfernt und durch das Regenerationsmodul 194 ersetzt.

Das Regenerationsmodul 194 unterbricht dabei eine Fluidverbindung zwischen dem Rohgaskanal 188 und dem Reingaskanal 192. Hierdurch kann insbesondere eine weitere Abscheidung von Verunreinigungen vermieden werden. Vorzugsweise kann hierdurch gewährleistet werden, dass flüssige oder klebrige Bestandteile von Verunreinigungen auf den zu regenerierenden Abscheideelementen 108 trocknen und somit einfacher abgereinigt werden können.

Die Regenerationsvorrichtung 156 des Regenerationsmoduls 194 wird dann insbesondere an die Abscheideelemente 108 herangeführt. Beispielsweise wird die Abstreifvorrichtung 160 mit den Borsten der als Bürstenwalze 140 ausgebildeten Rotationsabscheideelemente 138 in Eingriff gebracht, um an den Borsten anhaftende Verunreinigungen abzustreifen.

Mittels einer Auffangwanne 162, welche insbesondere ebenfalls Bestandteil des Regenerationsmoduls 194 sein kann, werden die abgestreiften Verunreinigungen vorzugsweise aufgefangen.

Nach erfolgter Abreinigung der Verunreinigungen von den Abscheideelementen 108 kann das Regenerationsmodul 194 von der Modulaufnahme 190 entfernt und beispielsweise zur Regeneration von weiteren Abscheideelementen 108 einer weiteren Modulaufnahme 190 zugeführt werden.

Das während der Regeneration von Abscheideelementen 108 der Modulaufnahme 190 von dieser Modulaufnahme 190 entfernte Abscheidemodul 100 kann während des Regenerationsvorgangs ebenfalls regeneriert werden. Beispielsweise können darin enthaltene Abscheideelemente 108 gereinigt oder durch neue Abscheideelemente 108 ersetzt werden.

Beispielsweise dann, wenn die Abscheideanlage 102 keine an den Modulaufnahmen 190 angeordnete Abscheideelemente 108 umfasst, kann ein Regenerationsmodul 194 beispielsweise dafür vorgesehen sein, Abscheideelemente 108 an einem Abscheidemodul 100 zu regenerieren. Hierzu ist insbesondere ein Regenerationsmodul 194 an ein zu regenerierendes Abscheidemodul 100 heranfahrbar.

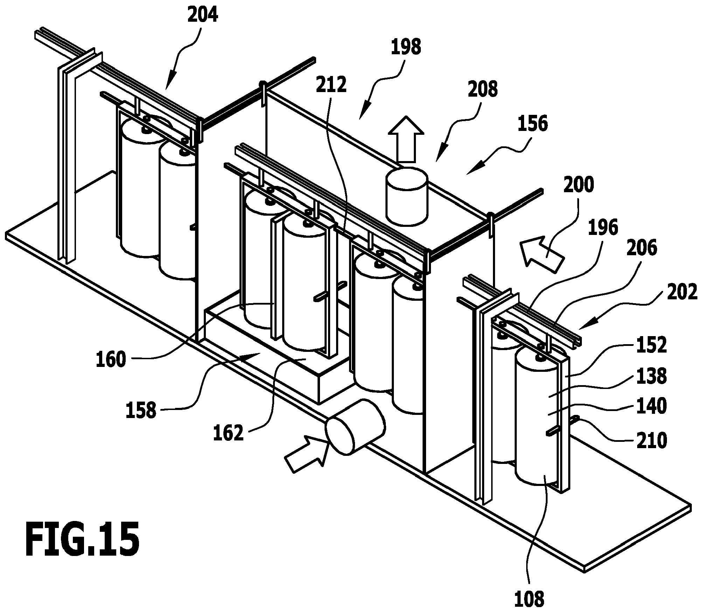

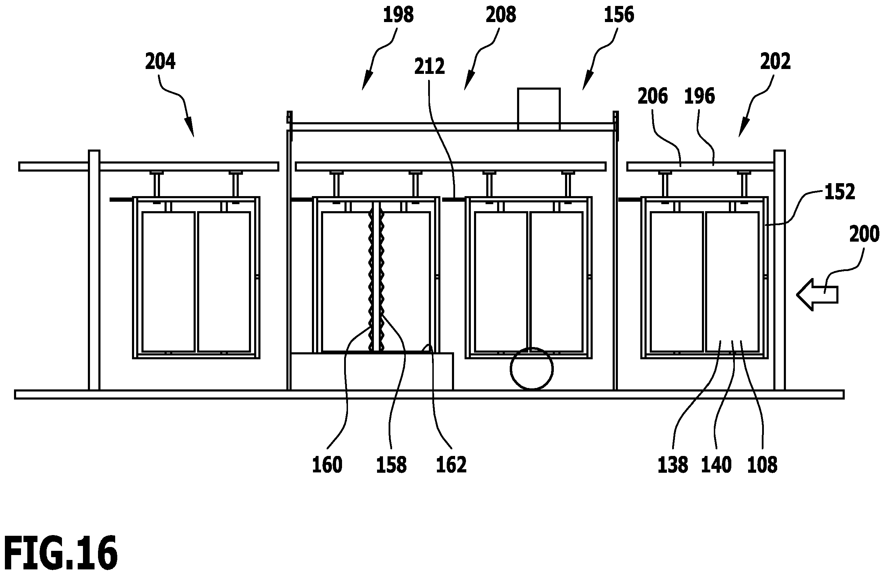

In den Fig. 15 und 16 ist eine alternative Ausgestaltung einer Regenerationsvorrichtung 156 dargestellt.

Diese Regenerationsvorrichtung 156 gemäß den Fig. 15 und 16 ist insbesondere eine von den Abscheidemodulen 100, dem Regenerationsmodul 194 und der gesamten Grundkonstruktion 186 verschiedene Vorrichtung.

Die Regenerationsvorrichtung 156 umfasst vorzugsweise eine Fördervorrichtung 196, mittels welcher ein Abscheideelement 108 durch einen Regenerationsbereich 198 der Regenerationsvorrichtung 156 in einer Förderrichtung 200 hindurch förderbar ist.

Die Regenerationsvorrichtung 156 umfasst vorzugsweise einen Bestückungsbereich 202, in welchem ein Abscheideelement 108 an der Fördervorrichtung 196 anordenbar ist.

Ferner ist ein Entnahmebereich 204 der Regenerationsvorrichtung 156 vorgesehen, in welchem ein Abscheideelement 108 von der Fördervorrichtung 196 entfernbar ist.

Die Fördervorrichtung 196 ist insbesondere als ein Hängeförderer 206 ausgebildet. Während der Regeneration von den Abscheideelementen 108 herabfallende Verunreinigungen führen dadurch vorzugsweise nicht zu einer Verunreinigung der Fördervorrichtung 196.

Der Regenerationsbereich 198 der Regenerationsvorrichtung 156 umfasst insbesondere eine Trocknungsvorrichtung 208 und eine mechanische Behandlungsvorrichtung 158.

Mittels der Trocknungsvorrichtung 208 ist den zu regenerierenden Abscheideelementen 108 ein Luftstrom, insbesondere ein erwärmter Luftstrom, zuführbar, um an den Abscheideelementen 108 anhaftende Verunreinigungen zu trocknen.

Mittels der mechanischen Behandlungsvorrichtung 158, welche insbesondere als eine Abstreifvorrichtung 160 ausgebildet ist, sind die getrockneten Verunreinigungen vorzugsweise mechanisch von den Abscheideelementen 108 entfernbar.

Direkt unter der mechanischen Behandlungsvorrichtung 158 ist vorzugsweise eine Auffangwanne 162 angeordnet, um von dem Abscheideelement 108 abgereinigte Verunreinigungen sicher aufnehmen und abführen zu können.

Es kann vorgesehen sein, dass die Abscheideelemente 108 einzeln der Regenerationsvorrichtung 156 zuführbar und einzeln regenerierbar sind.

Vorzugsweise ist jedoch vorgesehen, dass jeweils zwei Abscheideelemente 108, welche insbesondere als Bürstenwalzen 140 ausgebildet sind, in einer Abscheideelementaufnahme 152 aufgenommen sind.

Die Abscheideelementaufnahme 152 ist vorzugsweise zusammen mit den darin aufgenommenen Abscheideelementen 108 an der Fördervorrichtung 196 anordenbar und durch den Regenerationsbereich 198 förderbar.

Eine Abscheideelementaufnahme 152 kann beispielsweise mindestens ein Handhabungselement 210, beispielsweise einen Griff, umfassen, so dass eine Person komfortabel an der Abscheideelementaufnahme 152 angreifen kann, insbesondere um diese zusammen mit den daran angeordneten Abscheideelementen 108 längs der Förderrichtung 200 zu bewegen.

Ferner kann vorgesehen sein, dass eine Abscheideelementaufnahme 152 mindestens einen Abstandshalter 212 umfasst.

Ein Abstandshalter 212 ist beispielsweise ein Auflaufhebel zur Aufrechterhaltung eines gewünschten Abstandes zwischen zwei in oder an der Regenerationsvorrichtung 156 angeordneten Abscheideelementaufnahmen 152.

Die Abscheideelementaufnahme 152 kann, wie mit Hinblick auf beispielsweise Fig. 1 erwähnt, im Abscheidebetrieb an dem Abscheidemodul 100 angeordnet sein und zugleich der Aufnahme von Abscheideelementen 108 zur Regeneration in der Regenerationsvorrichtung 156 dienen. Es kann jedoch auch vorgesehen sein, dass die Abscheideelementaufnahme 152 als ein separates Gehänge der Fördervorrichtung 196 ausgebildet ist und somit lediglich der Aufnahme der zu regenerierenden Abscheideelemente 108 bei der Regeneration derselben dient.

Eine Regenerationsvorrichtung 156 gemäß den Fig. 15 und 16, das heißt eine stationäre Regenerationsvorrichtung 156, kann beispielsweise alternativ oder ergänzend zu einer mobilen Regenerationsvorrichtung 156, beispielsweise einem Regenerationsmodul 194, vorgesehen sein.

Beispielsweise kann dann vorgesehen sein, dass eine regelmäßige kurze Grobreinigung von Abscheideelementen 108 mittels des Regenerationsmoduls 194 durchgeführt wird, während die stationäre Regenerationsvorrichtung 156 einer in größeren Zeitabständen erfolgenden gründlichen Reinigung der Abscheideelemente 108 dient.

Grundsätzlich eignen sich sämtliche der beschriebenen Abscheidemodule 100 zur Verwendung in einer der beschriebenen Abscheideanlagen 102.

Zudem können verschiedene Merkmale der beschriebenen Anlagen, Vorrichtungen, Module, Elemente, etc. zur Ausbildung weiterer vorteilhafter Ausgestaltungen beliebig miteinander kombiniert werden.

Beispielsweise kann die Regenerationsvorrichtung 156 auch zum Regenerieren von als drehbare Prallabscheider 166 ausgebildeten Abscheideelementen 108 verwendet werden.

Ferner kann beispielsweise vorgesehen sein, dass ein Regenerationsmodul 194 mit einer Applikationsvorrichtung 164 zum Applizieren von Hilfsmaterial versehen ist.

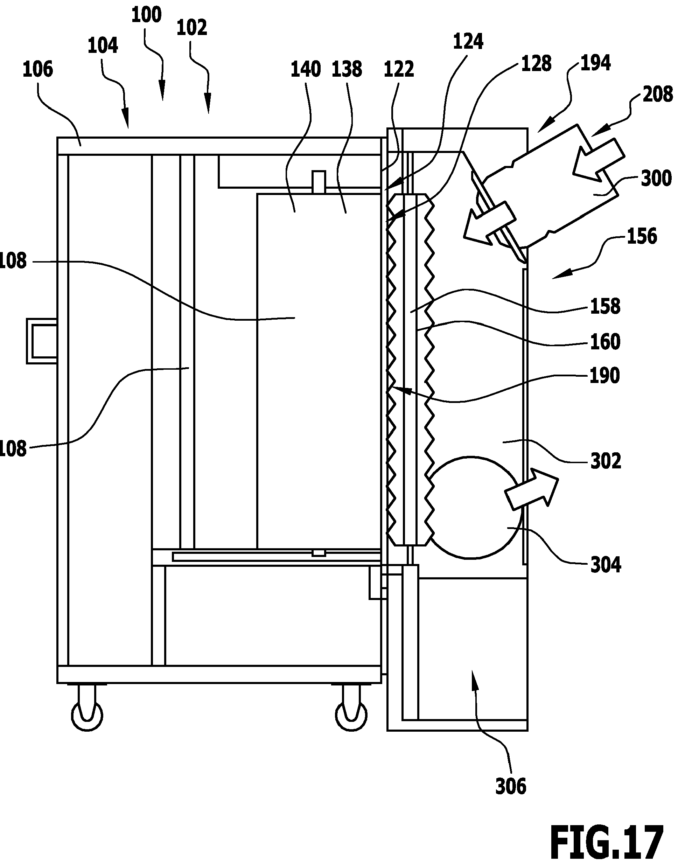

Eine in Fig. 17 dargestellte weitere alternative Ausgestaltung einer Regenerationsvorrichtung 156 unterscheidet sich von der in Fig. 14 dargestellten Regenerationsvorrichtung 156 insbesondere dadurch, dass die Regenerationsvorrichtung 156 als stationäres Regenerationsmodul 194 ausgebildet ist.

Das stationäre Regenerationsmodul 194 umfasst eine Modulaufnahme 190, an welcher ein mobiles Abscheidemodul 100 zur Regeneration eines an oder in dem Abscheidemodul 100 angeordneten Abscheideelements 108 anordenbar ist.

Das Regenerationsmodul 194 umfasst insbesondere eine Trocknungsvorrichtung 208 zum Trocknen von an dem zu regenerierenden Abscheideelement 108 anhaftenden Verunreinigungen.

Die Trocknungsvorrichtung 208 umfasst insbesondere eine Luftzuführung 300, mittels welcher einem Innenraum 302 des Regenerationsmoduls 194 Luft, insbesondere Heißluft oder Kaltluft, zuführbar ist.

Diese Luft ist insbesondere durch den Innenraum 302 des Regenerationsmoduls 194 hindurchführbar und über eine Luftabführung 304 aus dem Innenraum 302 des Regenerationsmoduls 194 abführbar.

Der Innenraum 302 ist über die Modulaufnahme 190 zu dem Abscheidemodul 100 hin geöffnet.

Die über die Luftzuführung 300 zugeführte Luft kann somit insbesondere zu dem Abscheideelement 108 gelangen, um dort beispielsweise die gewünschte Trocknungswirkung zu erzielen.

Die Luftzuführung 300 ist insbesondere derart in den Innenraum 302 des Regenerationsmoduls 194 gerichtet, dass die über die Luftzuführung 300 zugeführte Luft gezielt auf das zu regenerierende Abscheideelement 108 an oder in dem Abscheidemodul 100 trifft.

Das Regenerationsmodul 194 umfasst ferner vorzugsweise eine mechanische Behandlungsvorrichtung 158, insbesondere eine Abstreifvorrichtung 160.

Mittels der mechanischen Behandlungsvorrichtung 158 kann insbesondere das Abscheideelement 108 mechanisch behandelt werden, um, insbesondere getrocknete, Verunreinigungen von dem Abscheideelement 108 abzuschaben.

Mittels eines Auffangbehälters 306 des Regenerationsmoduls 194 werden die von dem Abscheideelement 108 entfernten Verunreinigungen vorzugsweise aufgefangen.

Das Regenerationsmodul 194 gemäß der in Fig. 17 dargestellten Ausführungsform kann insbesondere unabhängig von einer Lackieranlage 182 und/oder Abscheideanlage 102 vorgesehen und/oder betrieben werden.

Beispielsweise kann das Regenerationsmodul 194 beliebig positioniert werden, um bedarfsweise die Abscheidemodule 100, insbesondere die Abscheideelemente 108 der Abscheidemodule 100, regenerieren zu können.

Bei einer Weiterbildung des Regenerationsmoduls 194 kann vorgesehen sein, dass dieses mobil ausgebildet ist und zudem eine Modulaufnahme 190 zur Anordnung von zu regenerierenden Abscheidemodulen 100 aufweist. Ein solches mobiles Regenerationsmodul 194 kann insbesondere einfach an unterschiedlichen Positionen relativ zu der Abscheideanlage 102 angeordnet werden, um die Fahrwege der zu regenerierenden Abscheidemodule 100 zu minimieren.

Im Übrigen stimmt die in Fig. 17 dargestellte Ausführungsform der Regenerationsvorrichtung 156, insbesondere des Regenerationsmoduls 194, hinsichtlich Aufbau und Funktion mit der in Fig. 14 dargestellten Ausführungsform überein, so dass auf deren vorstehende Beschreibung insoweit Bezug genommen wird.

Das in Fig. 17 dargestellte Abscheidemodul 100 entspricht mit Ausnahme der nicht integrierten Regenerationsvorrichtung 156 vorzugsweise der in Fig. 3 dargestellten dritten Ausführungsform, so dass auf deren vorstehende Beschreibung insoweit Bezug genommen wird.

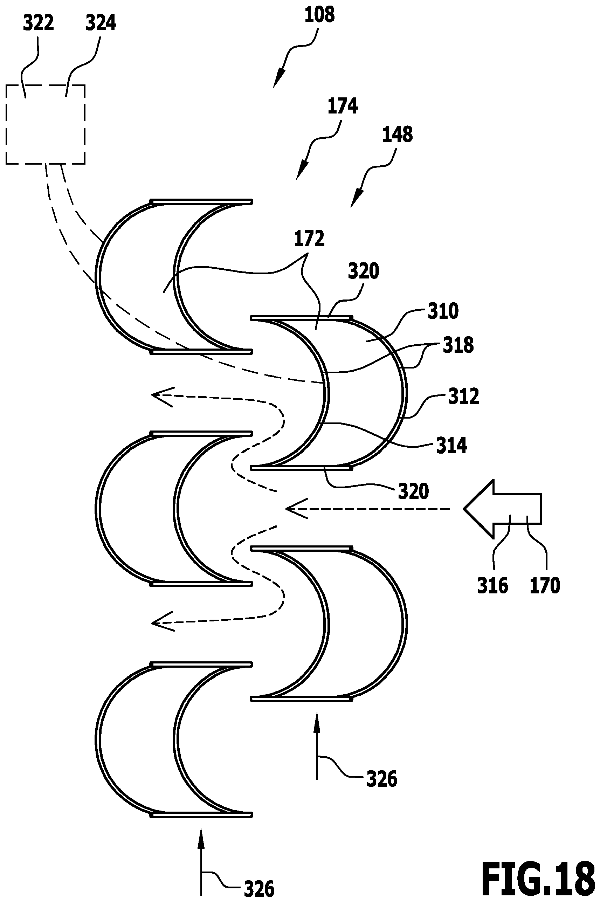

In den Fig. 18 bis 20 sind verschiedene Zustände einer alternativen Ausführungsform eines Umlenkabscheiders 148 dargestellt.

Der Umlenkabscheider 148 gemäß den Fig. 18 bis 20 unterscheidet sich von dem in Fig. 6 dargestellten Umlenkabscheider 148 insbesondere dadurch, dass die Strömungsumlenkelemente 172 im Wesentlichen bogenförmig ausgebildet sind und zudem komprimierbare Innenräume 310 aufweisen.

Die Strömungsumlenkelemente 172 umfassen insbesondere jeweils eine stromaufwärts angeordnete Wandung 312 und eine stromabwärts angeordnete Wandung 314.

Die Begriffe "stromaufwärts" und "stromabwärts" beziehen sich dabei insbesondere auf eine Einströmrichtung 170 und/oder eine Hauptströmungsrichtung 316, in welcher der Umlenkabscheider 148 mit dem zu reinigenden Gasstrom durchströmt wird.

Beispielsweise kann vorgesehen sein, dass die Strömungsumlenkelemente 172 jeweils durch zwei Halbschalen 318 gebildet sind.

Die Halbschalen 318 sind insbesondere relativ zueinander bewegbar.

Alternativ hierzu kann vorgesehen sein, dass die stromaufwärts angeordnete Wandung 312 und die stromabwärts angeordnete Wandung 314 mittels zweier Verbindungselemente 320 miteinander verbunden sind. Die Verbindungselemente 320 sind insbesondere als ein Faltelement oder als ein Faltenbalgelement ausgebildet, so dass die Wandungen 312, 314 relativ zueinander bewegbar sind.

Der Umlenkabscheider 148 umfasst vorzugsweise eine Druckvorrichtung 322, mittels welcher ein Innendruck im Innenraum 310 eines jeden Strömungselements 172 variierbar ist.

Insbesondere kann mittels der Druckvorrichtung 322 der Innendruck der Strömungselemente 172 angepasst an einen Beladungsgrad des Umlenkabscheiders 148 mit Verunreinigungen reduziert werden.

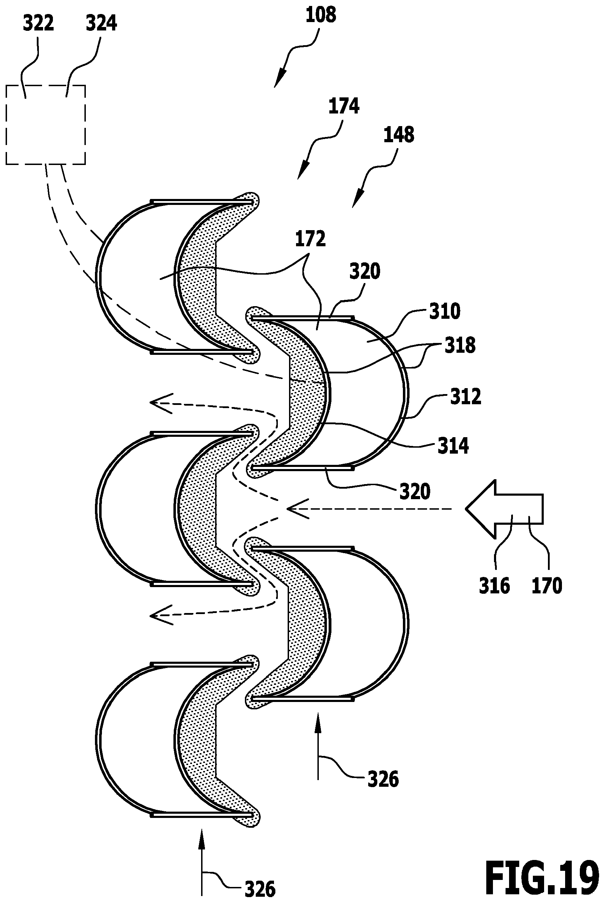

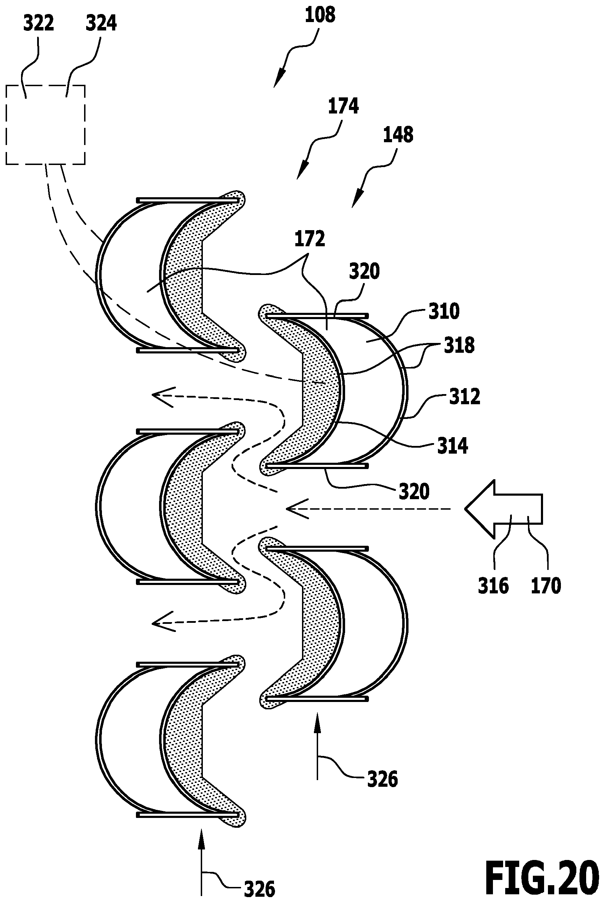

Wie insbesondere aus einem Vergleich der Fig. 19 und 20 hervorgeht, kann durch diese Reduktion des Innendrucks in den Innenräumen 310 der Strömungselemente 172 bewirkt werden, dass die Strömungsumlenkelemente 172 sich in der Hauptströmungsrichtung 316 verkleinern und somit der Abstand zwischen den Strömungsumlenkelementen 172 vergrößert wird.

Der vergrößerte Abstand zwischen den Strömungsumlenkelementen 172 bewirkt dabei insbesondere eine Erhöhung des Strömungsquerschnitts, welcher aufgrund der zunehmenden Beladung des Umlenkabscheiders 148 reduziert wird.

Mittels einer Steuervorrichtung 324 des Umlenkabscheiders 148 kann insbesondere gesteuert und/oder geregelt werden, in welchem Maße die Strömungsumlenkelemente 172 durch Reduktion des Innendrucks verkleinert, insbesondere komprimiert, werden. Insbesondere kann mittels der Steuervorrichtung 324 der Innendruck in den Strömungsumlenkelementen 172 stets so angepasst werden, dass der Strömungsquerschnitt des Umlenkabscheiders 148 auch mit zunehmendem Beladungsgrad im Wesentlichen konstant bleibt.

Wie den Fig. 18 bis 20 ferner zu entnehmen ist, sind die Strömungsumlenkelemente 172 des Umlenkabscheiders 148 vorzugsweise in versetzt zueinander angeordneten Reihen 326 angeordnet.

Die Strömungsumlenkelemente 172 von benachbart zueinander angeordneten Reihen 326 sind insbesondere so ausgerichtet, dass auf eine Reihe 326 von sich in der Hauptströmungsrichtung 316 öffnenden Strömungsumlenkelementen 172 eine Reihe 326 von sich entgegen der Hauptströmungsrichtung 316 öffnenden Strömungsumlenkelementen 172 folgt.

Im Übrigen stimmt die in den Fig. 18 bis 20 dargestellte Ausführungsform eines Umlenkabscheiders 148 hinsichtlich Aufbau und Funktion vorzugsweise mit der in Fig. 6 dargestellten Ausführungsform überein, so dass auf deren vorstehende Beschreibung insoweit Bezug genommen wird.

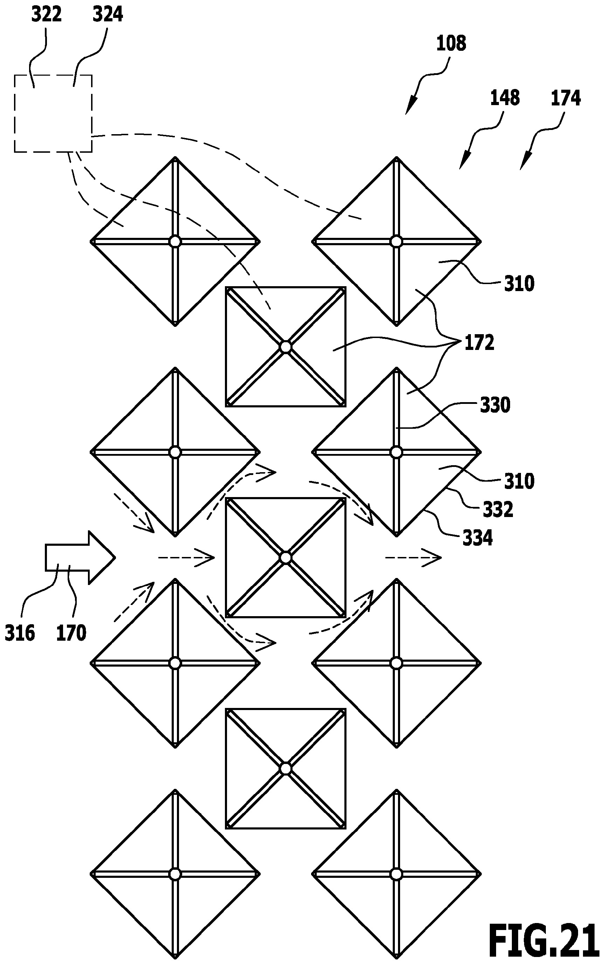

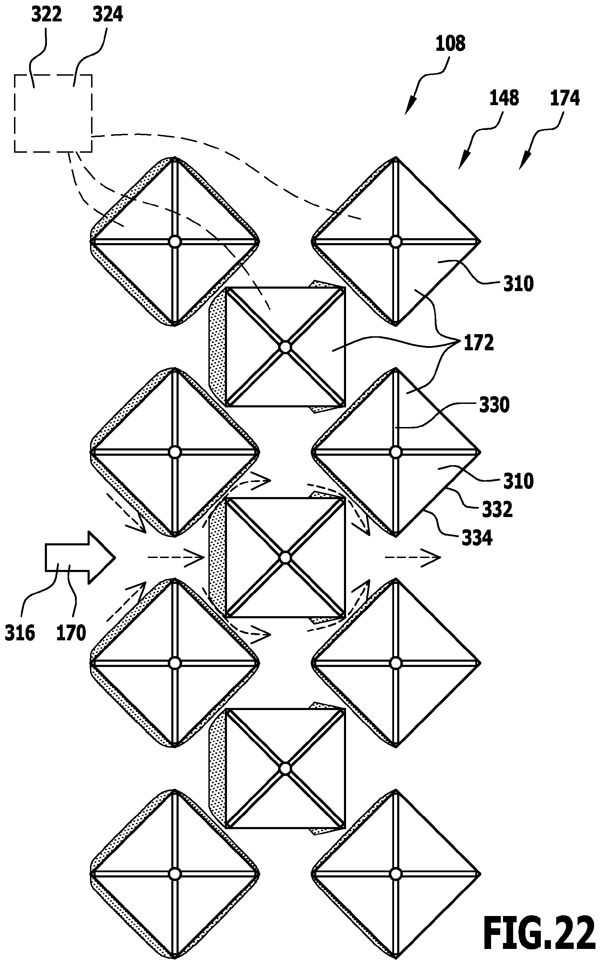

Eine in den Fig. 21 bis 23 dargestellte weitere alternative Ausführungsform eines Umlenkabscheiders 148 unterscheidet sich von der in den Fig. 18 bis 20 dargestellten Ausführungsform im Wesentlichen dadurch, dass die Strömungsumlenkelemente 172 eine beispielsweise kreuzförmige formstabile Stützstruktur 330 aufweisen.

Die formstabile Stützstruktur 330 eines jeden Strömungsumlenkelements 172 ist vorzugsweise von einer verformbaren, insbesondere elastisch verformbaren, Außenhülle 332 umgeben.

Die Außenhülle 332 bildet insbesondere eine Wandung 334 eines jeden Strömungsumlenkelements 172.

Wie insbesondere aus einem Vergleich der Fig. 21, 22 und 23 hervorgeht, kann aufgrund der verformbaren Außenhülle 332 eine äußere Form eines jeden Strömungsumlenkelements 172 variiert werden.

So kann beispielsweise durch Variation eines im Innenraum 310 der Strömungsumlenkelemente 172 wirkenden Innendrucks die Außenhülle 332 in Richtung der formstabilen Stützstruktur 330 zusammengezogen werden.

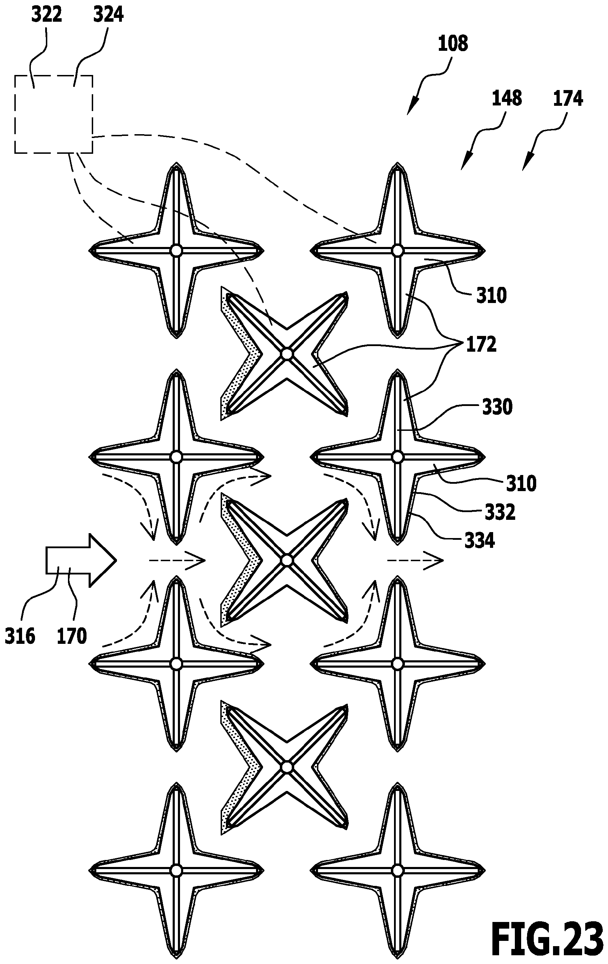

Ausgehend von einem beispielsweise rechteckigen, insbesondere quadratischen, Querschnitt der Strömungsumlenkelemente 172 in dem in Fig. 21 dargestellten unbeladenen Zustand des Umlenkabscheiders 148 kann dann beispielsweise ein in Fig. 23 dargestellter sternförmiger Querschnitt der Strömungsumlenkelemente 172 erzielt werden.

Durch die Querschnittsänderung kann insbesondere ein Abstand zwischen den Strömungsumlenkelementen 172 variiert werden, insbesondere um letztlich einen Strömungsquerschnitt des Umlenkabscheiders 148 auch bei zunehmendem Beladungsgrad zumindest näherungsweise konstant zu halten.

Im Übrigen stimmt die in den Fig. 21 bis 23 dargestellte Ausführungsform eines Umlenkabscheiders 148 hinsichtlich Aufbau und Funktion mit der in den Fig. 18 bis 20 dargestellten Ausführungsform überein, so dass auf deren vorstehende Beschreibung insoweit Bezug genommen wird.

## Patentansprüche

1. Abscheideanlage (102) zum Abscheiden von Verunreinigungen aus einem Rohgasstrom,
wobei die Abscheideanlage (102) ein Abscheidemodul (100) umfasst, welches an einer Modulaufnahme (190) der Abscheideanlage (102) anordenbar ist und welchem der Rohgasstrom zum Abscheiden von Verunreinigungen zuführbar ist,
wobei die Abscheideanlage (102) eine Abscheidestufe (136) umfasst, welche ein Rotationsabscheideelement (138) umfasst, welches als eine Bürstenwalze (140) und/oder ein drehbarer Prallabscheider (166) ausgebildet ist,
wobei die Abscheideanlage (102) ein Regenerationsmodul (194) umfasst, welches eine Regenerationsvorrichtung (156) zur Regeneration des Abscheideelements (108) umfasst, wobei entweder
a) das Regenerationsmodul (194) mobil ist, als ein Regenerierwagen ausgebildet ist und zur Regeneration des Abscheideelements (108) bedarfsweise in oder an der Abscheideanlage (102), in oder an einer Modulaufnahme (190) und/oder in oder an einem Abscheidemodul (100) anordenbar ist; oder
b) das Regenerationsmodul (194) stationär ist und eine Modulaufnahme (190) umfasst, an welcher ein als ein verfahrbarer oder verschiebbarer Transportwagen (104) ausgebildetes mobiles Abscheidemodul (100) zur Regeneration eines an oder in dem Abscheidemodul (100) angeordneten Abscheideelements (108) anordenbar ist.

2. Abscheideanlage (102) nach Anspruch 1, **dadurch gekennzeichnet, dass** die Abscheideanlage (102) mehrere Abscheidemodule (100) und/oder mehrere Modulaufnahmen (190) umfasst.

3. Abscheideanlage (102) nach einem der Ansprüche 1 oder 2, **dadurch gekennzeichnet,**
**dass** die Abscheideanlage (102) zwei oder mehr als zwei Abscheidestufen (136) umfasst, welche sich hinsichtlich ihrer Funktionsweise, ihres Aufbaus und/oder ihrer Dimensionierung voneinander unterscheiden, wobei mindestens eine der Abscheidestufen (136) in einem Abscheidemodul (100) angeordnet ist und/oder wobei mindestens eine der Abscheidestufen (136) in oder an einer Modulaufnahme (190) angeordnet ist.

4. Abscheideanlage (102) nach einem der Ansprüche 1 bis 3, **dadurch gekennzeichnet, dass** eine Abscheidestufe (136) jeweils mehrere Abscheideelemente (108), insbesondere Rotationsabscheideelemente (138), umfasst, welche in einer gemeinsamen Abscheideelementaufnahme (152) angeordnet und zusammen mit der Abscheideelementaufnahme (152) von einem Abscheidemodul (100) oder einer Modulaufnahme (190) entfernbar sind.

5. Abscheideanlage (102) nach einem der Ansprüche 1 bis 4, **dadurch gekennzeichnet, dass** die Abscheideanlage (102), insbesondere ein Abscheidemodul (100) und/oder eine Modulaufnahme (190), eine Kopplungsvorrichtung (146) umfasst, mittels welcher elektrische und/oder mechanische Energie von einer Modulaufnahme (190) auf ein Abscheidemodul (100) übertragbar ist.

6. Abscheideanlage (102) nach einem der Ansprüche 1 bis 5, **dadurch gekennzeichnet, dass** ein Abscheidemodul (100) eine Antriebsvorrichtung (142) umfasst, mittels welcher ein Abscheideelement (108) des Abscheidemoduls (100) antreibbar ist,
wobei die Antriebsvorrichtung (142) vorzugsweise eine Rotorvorrichtung (154) umfasst, welche mittels des Rohgasstroms oder eines durch Reinigung des Rohgasstroms erhältlichen Reingasstroms antreibbar ist, so dass der Rohgasstrom oder der durch Reinigung des Rohgasstroms erhältliche Reingasstrom zum Antreiben des beweglichen Abscheideelements (108) nutzbar ist.

7. Abscheideanlage (102) nach einem der Ansprüche 1 bis 6, **dadurch gekennzeichnet, dass**
a) die Regenerationsvorrichtung (156) eine Trocknungsvorrichtung (208) und/oder eine mechanische Behandlungsvorrichtung (158) umfasst; und/oder
b) ein Abscheidemodul (100) eine Regenerationsvorrichtung (156) umfasst; und/oder
c) die Regenerationsvorrichtung (156) eine von einem Abscheidemodul (100) separate mobile oder stationäre Vorrichtung ist.

8. Abscheideanlage (102) nach einem der Ansprüche 1 bis 7, **dadurch gekennzeichnet, dass**
a) die Abscheideanlage (102) eine Applikationsvorrichtung (164) zur Applikation von Hilfsmaterial auf ein Abscheideelement (108) der Abscheideanlage (102) umfasst; und/oder
b) die Abscheideanlage (102) ein Abscheideelement (108) umfasst, welches als ein Umlenkabscheider (148) ausgebildet ist, wobei der Umlenkabscheider (148) vorzugsweise zwei oder mehr Strömungsumlenkelemente (172) umfasst, an welchen der Rohgasstrom zur Abscheidung von Verunreinigungen umlenkbar ist, wobei vorzugsweise eine Bewegungsvorrichtung (174) des Umlenkabscheiders (148) vorgesehen ist, mittels welcher ein Abstand (A) zwischen den Strömungsumlenkelementen (172) veränderbar ist; und/oder
c) die Abscheideanlage (102) ein Abscheideelement (108) umfasst, welchem eine Bypassvorrichtung (176) der Abscheideanlage (102) zugeordnet ist, wobei vorzugsweise eine Bypassvorrichtung (176) insbesondere im Fall eines zu stark mit Verunreinigungen beladenen Abscheideelements (108) aktivierbar ist, so dass der Rohgasstrom zusätzlich oder alternativ einem weiteren Abscheideelement (108) und/oder einem weiteren Abscheidebereich (178) desselben Abscheideelements (108) zuführbar ist.

9. Verfahren zum Abscheiden von Verunreinigungen aus einem Rohgasstrom mittels einer Abscheideanlage (102), wobei das Verfahren Folgendes umfasst:
- Anordnen eines Abscheidemoduls (100) der Abscheideanlage (102) an einer Modulaufnahme (190) der Abscheideanlage (102);
- Zuführen des Rohgasstroms zu dem Abscheidemodul (100) und Abscheiden von Verunreinigungen aus dem Rohgasstrom mittels einer Abscheidestufe (136) des Abscheidemoduls (100), welche ein Rotationsabscheideelement (138) umfasst, welches als eine Bürstenwalze (140) und/oder ein drehbarer Prallabscheider (166) ausgebildet ist;
- Regenerieren eines Abscheideelements (108) der Abscheideanlage (102) mittels einer Regenerationsvorrichtung (156) eines Regenerationsmoduls (194),
wobei entweder
a) das Regenerationsmodul (194) mobil ist, als ein Regenerierwagen ausgebildet ist und zur Regeneration des Abscheideelements (108) bedarfsweise in oder an der Abscheideanlage (102), in oder an einer Modulaufnahme (190) und/oder in oder an einem Abscheidemodul (100) angeordnet wird; oder
b) das Regenerationsmodul (194) stationär ist und eine Modulaufnahme (190) umfasst, an welcher ein als ein verfahrbarer oder verschiebbarer Transportwagen (104) ausgebildetes mobiles Abscheidemodul (100) zur Regeneration eines an oder in dem Abscheidemodul (100) angeordneten Abscheideelements (108) angeordnet wird.

10. Verfahren nach Anspruch 9, **dadurch gekennzeichnet,**
**dass** das mobile Abscheidemodul (100) zum Regenerieren des Abscheideelements (108) von der Modulaufnahme (190) der Abscheideanlage (102) entfernt und an einer Modulaufnahme (190) der Regenerationsvorrichtung (156) angeordnet wird.

## Claims

1. A separation plant (102) for separating impurities from a crude gas flow, wherein the separation plant (102) comprises a separation module (100) which is arrangeable on a module receptacle (190) of the separation plant (102) and to which the crude gas flow is feedable for the separation of impurities,
wherein the separation plant (102) comprises a separation stage (136) which comprises a rotary separation element (138) which is formed as a brush roller (140) and/or a rotatable impact separator (166),
wherein the separation plant (102) comprises a regeneration module (194) which comprises a regeneration device (156) for regeneration of the separation element (108), wherein either
a) the regeneration module (194) is mobile, is formed as a regeneration carriage and, for regeneration of the separation element (108), is arrangeable as necessary in or on the separation plant (102), in or on a module receptacle (190) and/or in or on a separation module (100); or
b) the regeneration module (194) is stationary and comprises a module receptacle (190), on which a mobile separation module (100) formed as a movable or displaceable transport carriage (104) is arrangeable for regeneration of a separation element (108) arranged on or in the separation module (100).

2. A separation plant (102) in accordance with claim 1, **characterised in that** the separation plant (102) comprises a plurality of separation modules (100) and/or a plurality of module receptacles (190).

3. A separation plant (102) in accordance with claims 1 or 2, **characterised in that** the separation plant (102) comprises two or more than two separation stages (136), which differ from one another in respect of their functioning, their structure, and/or their dimensions, wherein at least one of the separation stages (136) is arranged in a separation module (100), and/or
wherein at least one of the separation stages (136) is arranged in or on a module receptacle (190).

4. A separation plant (102) in accordance with claims 1 to 3, **characterised in that** each separation stage (136) comprises a plurality of separation elements (108), in particular rotary separation elements (138), which are arranged in a common separation element receptacle (152) and are removable from a separation module (100) or a module receptacle (190) together with the separation element receptacle (152).

5. A separation plant (102) in accordance with claims 1 to 4, **characterised in that** the separation plant (102), in particular a separation module (100) and/or a module receptacle (190), comprises a coupling device (146), by means of which electrical and/or mechanical energy is transferrable from a module receptacle (190) to a separation module (100).

6. A separation plant (102) in accordance with clams 1 to 5, **characterised in that** a separation module (100) comprises a drive device (142), by means of which a separation element (108) of the separation module (100) is drivable,
wherein the drive device (142) preferably comprises a rotor device (154), which is drivable by means of the crude gas flow or a clean gas flow obtainable by cleaning the crude gas flow, such that the crude gas flow or the clean gas flow obtainable by cleaning the crude gas flow is usable for driving the movable separation element (108).

7. A separation plant (102) in accordance with claims 1 to 6, **characterised in that**
a) the regeneration device (156) comprises a drying device (208) and/or a mechanical treatment device (158); and/or
b) a separation module (100) comprises a regeneration device (156); and/or
c) the regeneration device (156) is a mobile or stationary device separate from a separation module (100).

8. A separation plant (102) in accordance with claims 1 to 7, **characterised in that**
a) the separation plant (102) comprises an application device (164) for applying auxiliary material to a separation element (108) of the separation plant (102); and/or
b) the separation plant (102) comprises a separation element (108), which is formed as a deflection separator (148), wherein the deflection separator (148) preferably comprises two or more flow deflection elements (172), at which the crude gas flow is deflectable for separation of impurities, wherein a movement device (174) of the deflection separator (148) is preferably provided, by means of which movement device a spacing (A) between the flow deflection elements (172) is changeable; and/or
c) the separation plant (102) comprises a separation element (108), which is associated with a bypass device (176) of the separation plant (102), wherein a bypass device (176) preferably is activatable in particular in the case of a separation element (108) loaded too heavily with impurities, such that the crude gas flow additionally or alternatively is feedable to a further separation element (108) and/or a further separation region (178) of the same separation element (108).

9. A method for separating impurities from a crude gas flow by means of a separation plant (102), wherein the method comprises the following:
- arranging a separation module (100) of the separation plant (102) on a module receptacle (190) of the separation plant (102);
- feeding the crude gas flow to the separation module (100) and separating impurities from the crude gas flow by means of a separation stage (136) of the separation module (100), which separation stage comprises a rotary separation element (138) which is formed as a brush roller (140) and/or a rotatable impact separator (166);
- regenerating a separation element (108) of the separation plant (102) by means of a regeneration device (156) of a regeneration module (194),
wherein either
a) the regeneration module (194) is mobile, is formed as a regeneration carriage and, for regeneration of the separation element (108), is arranged as necessary in or on the separation plant (102), in or on a module receptacle (190) and/or in or on a separation module (100); or
b) the regeneration module (194) is stationary and comprises a module receptacle (190), on which a mobile separation module (100) formed as a movable or displaceable transport carriage (104) is arranged for regeneration of a separation element (108) arranged on or in the separation module (100).

10. A method in accordance with claim 9, **characterised in that** the mobile separation module (100), for regeneration of the separation element (108), is removed from the module receptacle (190) of the separation plant (102) and is arranged on a module receptacle (190) of the regeneration device (156).

## Revendications

1. Installation de séparation (102) servant à séparer des impuretés d'un flux de gaz brut,
dans laquelle l'installation de séparation (102) comprend un module de séparation (100), lequel peut être disposé au niveau d'un logement de module (190) de l'installation de séparation (102) et auquel le flux de gaz brut servant à séparer des impuretés peut être amené,
dans laquelle l'installation de séparation (102) comprend un étage de séparation (136), lequel comprend un élément de séparation de rotation (138), lequel est réalisé en tant qu'un cylindre à brosse (140) et/ou un séparateur à impact (166) rotatif,
dans laquelle l'installation de séparation (102) comprend un module de régénération (194), lequel comprend un dispositif de régénération (156) servant à la régénération de l'élément de séparation (108), dans laquelle ou
a) le module de régénération (194) est mobile, est réalisé en tant qu'un chariot de régénération et peut être disposé aux fins de la régénération de l'élément de séparation (108) si besoin dans ou au niveau de l'installation de séparation (102), dans ou au niveau d'un logement de module (190) et/ou dans ou au niveau d'un module de séparation (100) ; ou
b) le module de régénération (194) est stationnaire et comprend un logement de module (190), au niveau duquel peut être disposé un module de séparation (100) mobile réalisé en tant qu'un chariot de transport (104) pouvant être déplacé ou pouvant être coulissé, servant à la régénération d'un élément de séparation (108) disposé au niveau de ou dans le module de séparation (100).

2. Installation de séparation (102) selon la revendication 1, **caractérisé en ce que** l'installation de séparation (102) comprend plusieurs modules de séparation (100) et/ou plusieurs logements de module (190).

3. Installation de séparation (102) selon l'une quelconque des revendications 1 ou 2, **caractérisée en ce que** l'installation de séparation (102) comprend deux ou plus de deux étages de séparation (136), lesquels se distinguent les uns des autres eu égard à leur fonctionnement, leur structure et/ou leur dimensionnement, dans laquelle au moins un des étages de séparation (136) est disposé dans un module de séparation (100), et/ou
dans laquelle au moins un des étages de séparation (136) est disposé dans ou au niveau d'un logement de module (190).

4. Installation de séparation (102) selon l'une quelconque des revendications 1 à 3, **caractérisée en ce qu'**un étage de séparation (136) comprend respectivement plusieurs éléments de séparation (108), en particulier des éléments de séparation de rotation (138), lesquels sont disposés dans un logement d'éléments de séparation (152) commun et peuvent être retirés conjointement avec le logement d'éléments de séparation (152) d'un module de séparation (100) ou d'un logement de module (190).

5. Installation de séparation (102) selon l'une quelconque des revendications 1 à 4, **caractérisée en ce que** l'installation de séparation (102), en particulier un module de séparation (100) et/ou un logement de module (190), comprend un dispositif de couplage (146), au moyen duquel une énergie électrique et/ou mécanique peut être transmise d'un logement de module (190) sur un module de séparation (100).

6. Installation de séparation (102) selon l'une quelconque des revendications 1 à 5, **caractérisée en ce qu'**un module de séparation (100) comprend un dispositif d'entraînement (142), au moyen duquel un élément de séparation (108) du module de séparation (100) peut être entraîné,
dans laquelle le dispositif d'entraînement (142) comprend de préférence un dispositif de rotor (154), lequel peut être entraîné au moyen du flux de gaz brut ou d'un flux de gaz pur pouvant être obtenu par nettoyage du flux de gaz brut de sorte que le flux de gaz brut ou le flux de gaz pur pouvant être obtenu par nettoyage du flux de gaz brut peut être utilisé pour entraîner l'élément de séparation (108) mobile.

7. Installation de séparation (102) selon l'une quelconque des revendications 1 à 6, **caractérisée en ce que**
a) le dispositif de régénération (156) comprend un dispositif de séchage (208) et/ou un dispositif de traitement (158) mécanique ; et/ou
b) un module de séparation (100) comprend un dispositif de régénération (156) ; et/ou
c) le dispositif de régénération (156) est un dispositif mobile ou stationnaire séparé d'un module de séparation (100).

8. Installation de séparation (102) selon l'une quelconque des revendications 1 à 7, **caractérisée en ce que**
a) l'installation de séparation (102) comprend un dispositif d'application (164) servant à l'application de matériau auxiliaire sur un élément de séparation (108) de l'installation de séparation (102) ; et/ou
b) l'installation de séparation (102) comprend un élément de séparation (108), lequel est réalisé en tant qu'un séparateur de déviation (148), dans laquelle le séparateur de déviation (148) comprend de préférence deux ou plus éléments de déviation de flux (172), au niveau desquels le flux de gaz brut peut être dévié pour séparer des impuretés, dans laquelle de préférence un dispositif de déplacement (174) du séparateur de déviation (148) est prévu, au moyen duquel un espacement (A) entre les éléments de déviation de flux (172) peut être modifié ; et/ou
c) l'installation de séparation (102) comprend un élément de séparation (108), auquel est associé un dispositif de dérivation (176) de l'installation de séparation (102), dans laquelle de préférence un dispositif de dérivation (176) peut être activé en particulier dans le cas d'un élément de séparation (108) trop fortement chargé en impuretés si bien que le flux de gaz brut peut être amené en supplément ou en variante à un autre élément de séparation (108) et/ou à une autre zone de séparation (178) du même élément de séparation (108).

9. Procédé servant à séparer des impuretés d'un flux de gaz brut au moyen d'une installation de séparation (102), dans lequel le procédé comprend les étapes suivantes :
- d'agencement d'un module de séparation (100) de l'installation de séparation (102) au niveau d'un logement de module (190) de l'installation de séparation (102) ;
- d'amenée du flux de gaz brut au module de séparation (100) et de séparation des impuretés du flux de gaz brut au moyen d'un étage de séparation (136) du module de séparation (100), lequel comprend un élément de séparation de rotation (138), lequel est réalisé en tant qu'un cylindre à brosse (140) et/ou un séparateur à impact (166) rotatif ;
- de régénération d'un élément de séparation (108) de l'installation de séparation (102) au moyen d'un dispositif de régénération (156) d'un module de régénération (194),
dans lequel ou
a) le module de régénération (194) est mobile, est réalisé en tant qu'un chariot de régénération et est disposé aux fins de la régénération de l'élément de séparation (108) si besoin dans ou au niveau de l'installation de séparation (102), dans ou au niveau d'un logement de module (190) et/ou dans ou au niveau d'un module de séparation (100) ; ou
b) le module de régénération (194) est stationnaire et comprend un logement de module (190), au niveau duquel est disposé un module de séparation (100) mobile réalisé en tant qu'un chariot de transport (104) pouvant être déplacé ou pouvant être coulissé, servant à la régénération d'un élément de séparation (108) disposé au niveau de ou dans le module de séparation (100).

10. Procédé selon la revendication 9, **caractérisé en ce que** le module de séparation (100) mobile servant à régénérer l'élément de séparation (108) est retiré du logement de module (190) de l'installation de séparation (102) et est disposé au niveau d'un logement de module (190) du dispositif de régénération (156).
